(19) Europäisches Patentamt
European Patent Office
Office européen des brevets

(11) **EP 0 923 745 B1**

(12) **EUROPEAN PATENT SPECIFICATION**

(45) Date of publication and mention
of the grant of the patent:
**27.02.2008 Bulletin 2008/09**

(51) Int Cl.:
*G01V 1/36* (2006.01)     *G01V 1/38* (2006.01)

(21) Application number: **97936177.1**

(86) International application number:
**PCT/US1997/012889**

(22) Date of filing: **23.07.1997**

(87) International publication number:
**WO 1998/010312 (12.03.1998 Gazette 1998/10)**

(54) **METHOD FOR RECONSTRUCTING SEISMIC WAVEFIELDS**

VERFAHREN ZUR WIEDERHERSTELLUNG VON SEISMISCHEN WELLENFELDERN

PROCEDE UTILISE POUR RECONSTRUIRE DES CHAMPS D'ONDES SISMIQUES

(84) Designated Contracting States:
**DE FR GB NL**

(30) Priority: **04.09.1996 US 25428 P**

(43) Date of publication of application:
**23.06.1999 Bulletin 1999/25**

(73) Proprietor: **ExxonMobil Upstream Research Company**
**Houston, TX 77252-2189 (US)**

(72) Inventors:
• **DUREN, Richard, E.**
**Conroe, TX 77305 (US)**
• **ERIKSEN, Erik, A.**
**Houston, TX 77095 (US)**
• **TRANTHAM, Eugene, Clark**
**Houston, TX 77006 (US)**

(74) Representative: **HOFFMANN EITLE**
**Patent- und Rechtsanwälte**
**Arabellastrasse 4**
**81925 München (DE)**

(56) References cited:
GB-A- 2 256 048     US-A- 4 594 693
US-A- 5 197 039     US-A- 5 206 837
US-A- 5 596 547     US-A- 5 648 938

• **BLACK J L ET AL: "True-amplitude imaging and dip moveout" GEOPHYSICS, JAN. 1993, USA, vol. 58, no. 1, pages 47-66, XP002172206 ISSN: 0016-8033**
• **56TH EAEG MTG., Paper No. HO55, June 1994, JAKUBOWICZ H., "Wavelength Reconstruction", 2 pages, XP001052764**
• **57TH EAEG CONF., Paper No. CO24, June 1995, BRINK et al., "Effects of Seismic Acquisition Geometry on Seismic Processing - Analysis of the DMO (Dip Moveout) Techniques", 2 pages, XP001052765**
• **57TH EAEG CONF., Paper No. EO43, June 1995, ROBEIN et al., "Accurate Simulation of the Kinematics of DMO in Travel-Time Inversion", 2 pages, XP001052766**

**Description**

## FIELD OF THE INVENTION

This invention relates generally to the field of seismic prospecting and, more particularly, to seismic data acquisition and processing. Specifically, the invention is a method for reconstructing the seismic wavefield at a designated common midpoint and offset location from prestack seismic data traces for other common midpoint and offset locations.

## BACKGROUND OF THE INVENTION

In the oil and gas industry, seismic prospecting techniques are commonly used to aid in the search for and evaluation of subterranean hydrocarbon deposits. In seismic prospecting, a seismic source is used to generate a seismic signal which propagates into the earth and is at least partially reflected by subsurface seismic reflectors (i.e., interfaces between underground formations having different elastic properties). The reflections are detected and measured by seismic receivers located at or near the surface of the earth, in an overlying body of water, or at known depths in boreholes, and the resulting seismic data may be processed to yield information relating to the subsurface formations.

Seismic prospecting consists of three main stages: data acquisition, data processing, and interpretation. The success of a seismic prospecting operation is dependent on satisfactory completion of all three stages.

The most widely used seismic data acquisition and processing technique is the common midpoint (CMP) method. The midpoint is the point midway between the source and the receiver. According to the CMP method, each seismic signal is recorded at a number of different receiver locations and each receiver location is used to record seismic signals from a number of different source locations. This results in a number of different data traces having different source-to-receiver offsets for each midpoint. The resulting data traces are corrected for normal moveout (i.e., the variation of reflection arrival time caused by variation of the source-to-receiver offset), and are then sorted into common midpoint gathers and stacked to simulate the data trace that would have been recorded by a coincident source and receiver at each midpoint location, but with improved signal-to-noise ratio.

The primary purposes of seismic data processing are to remove or suppress unwanted noise components and to transform the data into seismic sections or images which facilitate interpretation. Examples of well known seismic data processing operations include applying corrections for known perturbing causes, rearranging the data, filtering the data according to a selected criteria, stacking the data, migrating the stacked data to correctly position the reflectors, measuring attributes of the data, and displaying the final result. The particular sequence of processing operations used to process seismic data is dependent on a number of factors such as the field acquisition parameters, the quality of the data, and the desired output.

As is well known in the art, modem seismic data processing operations are performed on digitized data. A digitized seismic data trace is a uniformly sampled time series of discrete measurements of the seismic signal at the receiver in question. A problem known as "aliasing," which is defined as the introduction of frequency ambiguities as a result of the sampling process, can occur in processing digitized data. Where there are fewer than two data samples per cycle, an input signal at one frequency can appear to be another frequency at output. Hence, this problem is best described in the frequency domain where aliased frequencies can be folded (or wrapped) onto other frequencies. To avoid aliasing, frequencies above the folding or Nyquist frequency (which is one-half of the frequency of sampling) must be removed by an anti-alias filter before sampling. For example, for seismic data having a 4 millisecond sampling rate (i.e., a sampling frequency of 250 samples per second), all frequencies above 125 Hertz must be removed in order to avoid aliasing.

Aliasing is an inherent property of all sampling systems. It applies to sampling at discrete time intervals in digital seismic recording, as described above. It can also apply to the spatial distance between individual CMP locations (i.e., spatial sampling). If the spatial sampling interval is too large, certain data processing operations performed in the spatial frequency domain (e.g., dip moveout or DMO) can become spatially aliased. If this happens, events with steep dips can be perceived as different from what they actually are and acquisition noises can be introduced into the processed data.

The problem of spatial aliasing can be particularly acute with respect to a three-dimensional (3-D) marine seismic survey in which multiple sources and/or multiple receivers are used to generate multiple CMP lines on each pass of the seismic vessel resulting in fewer passes (and, consequently, lower cost) to complete the survey. Each of these CMP lines, however, typically has a number of missing shots relative to normal two-dimensional (2-D) data acquisition. These missing shots can cause spatial aliasing during subsequent data processing operations which will degrade the final image.

Spatial aliasing can be avoided by using a sufficiently small trace spacing. This requires either (a) modification of the field recording geometry to include additional sources and/or receivers or (b) use of a data-dependent interpolation scheme to generate extra traces.

Modification of the field recording geometry to generate additional data traces is undesirable because of the added expense that this entails. Therefore, past efforts to avoid spatial aliasing have focused on statistical interpolation techniques to generate additional data traces. One such technique is FX-Wiener interpolation. See, e.g., Spitz, S., "Seismic trace interpolation in the F-X domain," Geophysics, Vol. 56, No. 6, June 1991, pp. 785-794. However, this technique has proven to be too unstable for routine use. It is based on least squares matching of the data using a spatially invariant filter. The least squares criterion tends to ignore primary data when a higher amplitude coherent noise is present. The spatial invariance of the filter favors constant dipping reflectors over curved ones, since only constant dipping reflectors are truly predictable using a spatially invariant filter. Also, extrapolation of an event into a gap using FX-Wiener interpolation can produce very high amplitudes if the amplitude of the event is increasing in the direction of the gap.

Many of the flaws of FX-Wiener interpolation are also present in any statistical interpolation technique. The source of the difficulties is relying entirely on the recorded data to predict the missing data. Recorded data are contaminated with coherent and incoherent noises which make signal interpolation or extrapolation difficult.

Another potential method for solving the aliasing problem is based on the work of Vermeer. This method assumes that all data in a common midpoint gather have positive moveout. Hence, in k-space, any data which appear at negative k values were wrapped around from the positive values. If the data are only aliased once, the negative k values can be mapped to their corresponding positive values, effectively halving the spacing in the CMP domain and doubling the aliasing frequency. This approach works well so long as the data are aliased, or wrapped, no more than once. However, this method cannot be used to unwrap data which are aliased (wrapped) more than once. Compensation methods for irregular spatial sampling of seismic Merter are known from US 4 594 693 and US 5 206 837.

What is needed is a deterministic interpolation technique which uses knowledge about the underlying wave-propagation theory to interpolate or extrapolate data. The present invention satisfies this need.

## SUMMARY OF THE INVENTION

The present invention is a method for reconstructing a seismic wavefield at a designated common midpoint and offset location from a set of prestack seismic data traces obtained from a seismic survey, each of the prestack seismic data traces being a time series of discrete samples of the seismic signal received by a seismic receiver. In one embodiment, the method comprises the steps of (a) selecting the seismic wavefield to be reconstructed; (b) determining the normal moveout velocity of the selected seismic wavefield; (c) selecting a set of input data traces from the prestack common midpoint seismic data traces, the input data traces having common midpoint and offset locations proximate to the designated reconstruction location; (d) performing a normal moveout correction of the input data traces using the normal moveout velocity of the selected seismic wavefield; and (e) generating a reconstructed data trace representative of the selected seismic wavefield at the designated location by mapping each data sample on each of the normal moveout corrected input data traces onto its corresponding location on the reconstructed data trace. The mapping is performed using a reflection point mapping algorithm which transforms data from one offset into any other offset.

In one embodiment of the invention, the set of input data traces comprises data traces that lie horizontally between two diagonal lines in midpoint-offset space defined by the equation $\Delta$midpoint = $\pm\Delta$offset/2, where $\Delta$midpoint and $\Delta$offset are, respectively, the differences between the midpoint locations and the offsets of the input data trace in question and the reconstruction location. The set of input data traces may be further limited by a predetermined maximum $\Delta$offset which must be at least equal to the pattern number times the receiver interval and, preferably, is an integer multiple of the pattern number times the receiver interval.

In another embodiment of the invention, the set of input data traces is limited to the two actual data traces which (i) fall on the same common midpoint line as the reconstruction location and (ii) are located adjacent to (i.e., on either side of) the reconstruction location. In this embodiment, the reconstructed data trace is generated by copying weighted versions of the two input data traces to the reconstruction location and summing them. Preferably, the weighting is done using cosine weights based on the separations between the input data traces and the reconstruction location. Other weighting methods may be used if desired.

The inventive method may be used to reconstruct both primary wavefields and secondary wavefields, and results in true amplitude reconstructed data traces. If the wavefield being reconstructed is a secondary wavefield, the result may be subtracted from the actual data traces to eliminate interference between wavefields. In this manner, coherent noises (such as water-bottom multiples and peg-leg multiples) may be removed from a data set.

The method may be used to reconstruct data from missing shots in order to prevent spatial aliasing problems during other data processing operations.

## BRIEF DESCRIPTION OF THE DRAWINGS

The present invention and its advantages will be better understood by referring to the following detailed description and the attached drawings in which:

FIGS. 1A through 1C are schematic elevation views which illustrate three successive shots from a two-dimensional (2-D) marine seismic survey;

FIG. 2 is a stacking chart for the 2-D marine seismic survey illustrated in FIGS. 1A through 1C;

FIGS. 3A through 3C are schematic plan views which illustrate three successive shots from a three-dimensional (3-D) marine seismic survey having dual sources and a single receiver cable;

FIG. 4 is a stacking chart for one of the two CMP lines generated by the 3-D marine seismic survey illustrated in FIGS. 3A through 3C;

FIG. 5 is a flowchart illustrating the various steps used in implementing one embodiment of the present invention;

FIG. 6 illustrates application of one embodiment of the present invention in connection with a dual source, single receiver cable 3-D marine seismic survey;

FIGS. 7A, 7B, and 7C illustrate use of the present invention to remove water-bottom multiples from a model data set;

FIGS. 8A and 8B illustrate a CMP gather from a marine seismic survey before and after, respectively, application of the present invention;

FIG. 9 is a brute stack of data from one CMP line of a marine seismic survey;

FIG. 10 illustrates the results obtained when one-third of the data for the CMP line of FIG. 9 is processed using offset-borrowing reconstruction; and

FIG. 11 illustrates the results obtained when one-third of the data for the CMP line of FIG. 9 is processed using wavefield reconstruction.

## DETAILED DESCRIPTION OF THE PREFERRED EMBODIMENTS

### Introduction

Before proceeding with the detailed description, a brief discussion of certain seismic data acquisition and processing concepts will be presented to aid the reader in understanding the invention.

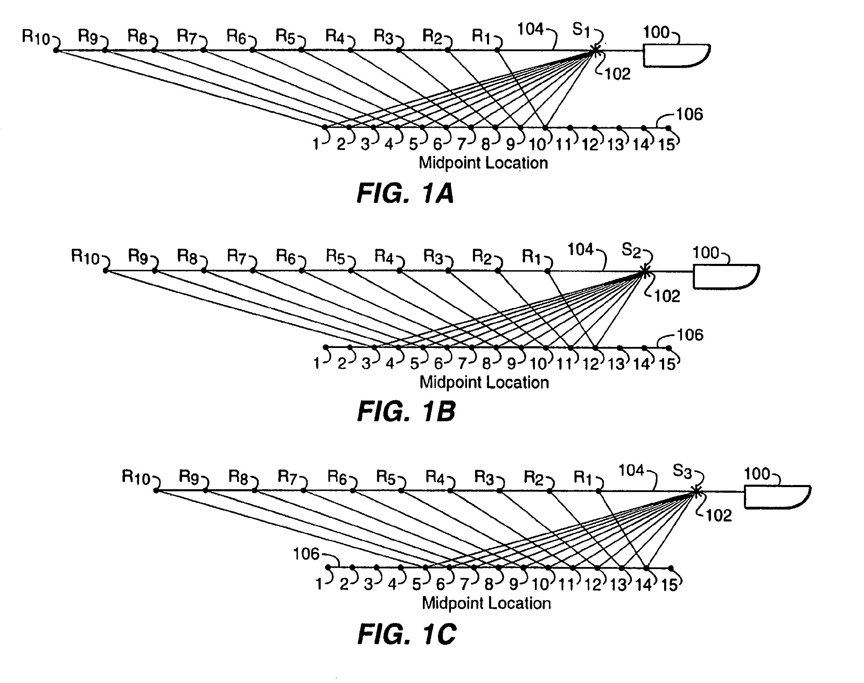

FIGS. 1A through 1C illustrate a typical 2-D marine seismic survey in which a seismic vessel 100 tows a single seismic source 102 and an in-line seismic streamer cable 104 containing a plurality of seismic receivers $R_1$ through $R_{10}$. Although only ten receivers are shown for purposes of clarity, persons skilled in the art will understand that actual marine seismic streamer cables may contain hundreds or even thousands of individual receivers.

In FIG. 1A, a first shot $S_1$ is fired by seismic source 102. The resulting seismic signal is received by seismic receivers $R_1$ through $R_{10}$ after being reflected by subsurface seismic reflector 106 which, for purposes of illustration, will be assumed to be a single, horizontal reflector. The seismic signals received by receivers $R_1$ through $R_{10}$ are recorded resulting in a total of ten prestack seismic data traces. According to the CMP method, each of these data traces is assigned to the relevant midpoint location which, for a horizontal reflector, is the reflection point on reflector 106. In other words, the data trace recorded by receiver $R_{10}$ is assigned to midpoint location 1 (the midpoint between shot $S_1$ and receiver $R_{10}$), the data trace recorded by receiver $R_9$ is assigned to midpoint location 2 (the midpoint between shot $S_1$ and receiver $R_9$), and so on.

In FIG. 1B, seismic vessel 100 has advanced a distance equal to the receiver spacing, and a second shot $S_2$ is fired by seismic source 102. The seismic signal is again received by seismic receivers $R_1$ through $R_{10}$ and recorded. In this case, the data trace recorded by receiver $R_{10}$ is assigned to midpoint location 3 (the midpoint between shot $S_2$ and receiver $R_{10}$), the data trace recorded by receiver $R_9$ is assigned to midpoint location 4 (the midpoint between shot $S_2$ and receiver $R_9$), and so on.

In FIG. 1C, the seismic vessel 100 has again advanced a distance equal to the receiver spacing, and a third shot $S_3$ is fired by seismic source 102. In this case the data trace recorded by receiver $R_{10}$ is assigned to midpoint 5 (the midpoint between shot $S_3$ and receiver $R_{10}$), the data trace recorded by receiver $R_9$ is assigned to midpoint 6 (the midpoint between shot $S_3$ and receiver $R_9$), and so on.

Note that the midpoint locations do not move in FIGS. 1A through 1C. This is because these locations represent fixed, geographic locations.

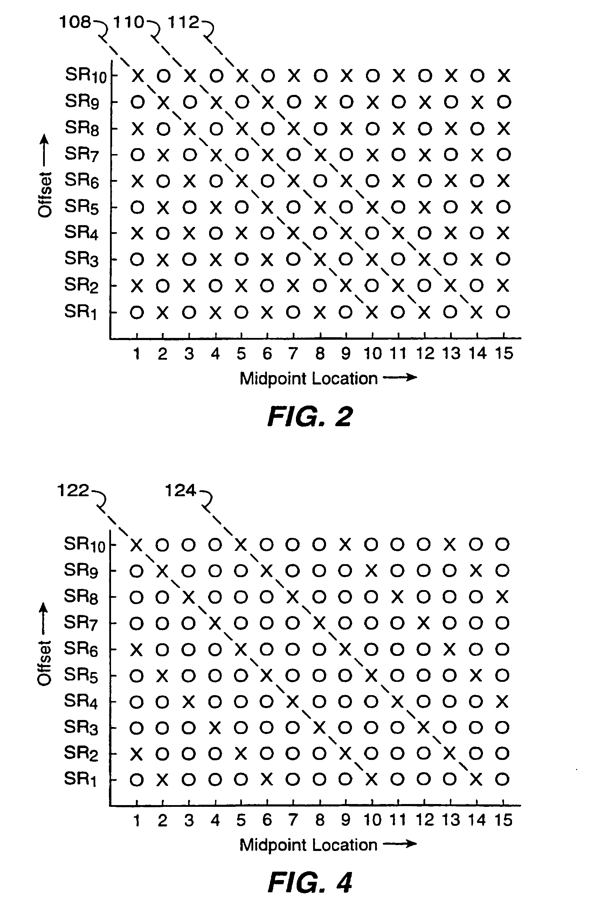

FIG. 2 is a stacking chart for the 2-D marine seismic survey illustrated in FIGS 1A through 1C. Midpoint locations (which correspond to the midpoint locations shown in FIGS 1A through 1C) are plotted along the abscissa while the source-receiver offsets are plotted on the ordinate. Source-receiver offset $SR_1$ represents the distance between seismic source 102 and receiver $R_1$, offset $SR_2$ represents the distance between seismic source 102 and receiver $R_2$, and so on. In the stacking chart, X's represent offset-midpoint locations that contain a data trace while O's represent offset-midpoint locations without a data trace. All data traces which result from shot $S_1$ are located along diagonal line 108. Similarly, data traces resulting from shots $S_2$ and $S_3$ are located, respectively, along diagonal lines 110 and 112. Data traces from other shots (both before shot $S_1$ and after shot $S_3$) are included in order to fill in the stacking chart.

As will be well known to persons skilled in seismic data processing operations, data traces having the same midpoint location are typically "binned" together for stacking purposes. Therefore, the interval between consecutive midpoints may also be referred to as the "CMP-bin interval."

FIG. 2 illustrates an important quantity of a seismic survey, the "pattern number." The pattern number is defined as the shot interval divided by the CMP-bin interval. Nominally, the CMP-bin interval is half of the receiver interval. If this is true, then

$$n_{pattern} = \left| \frac{\Delta x_s}{\Delta x_m} \right| = \left| \frac{2\Delta x_s}{\Delta x_r} \right|,$$

where $n_{pattern}$ is the pattern number, $\Delta x_s$ is the shot interval, $\Delta x_m$ is the CMP-bin interval, and $\Delta x_r$ is the receiver interval. The pattern number is seen in common offset sections or CMP gathers as the period of occurrence of live traces where the period is measured in traces including any missing traces due to the acquisition geometry. A trace is considered missing if within a CMP there is no trace corresponding to one of the nominal offsets recorded with each shot. In FIGS. 1A through 1C, the shot interval was equal to the receiver interval. Therefore, from the above formula, the pattern number is two. This can also be seen in FIG. 2 where the distance between live traces along any common offset (horizontal) line or along any CMP (vertical) line is two traces.

Referring again to FIG. 2, note that the stacking chart (also known as the stack array) is not full. As noted above, the pattern number is 2; therefore, only half of the data required for a full stacking chart is present. This is not necessarily a disaster. These data will alias during stack for wavelengths less than $4\Delta x_r$ (the Nyquist theorem applied to a CMP gather with trace spacing $2\Delta x_r$). However, if after normal moveout (NMO) correction there are no data with wavelengths less than the above value, then no effects of aliasing will be seen on the stacked section.

The pattern number is a key concept in seismic data acquisition and processing. Three reasons for this are:

1. The pattern number is a guide to data processors for predicting fold and offset distribution of stacked sections. Even when prestack migration is performed, the pattern number is used to determine the number of offsets to bin together to produce single-fold common offset bins.
2. The pattern number is a measure of deviation from a full stack array (i.e., where $n_{pattern}=1$ and $\Delta x_m=\Delta x_r/2$).
3. The pattern number is the minimum number of aliased offsets required to reconstruct a de-aliased offset using the present invention.

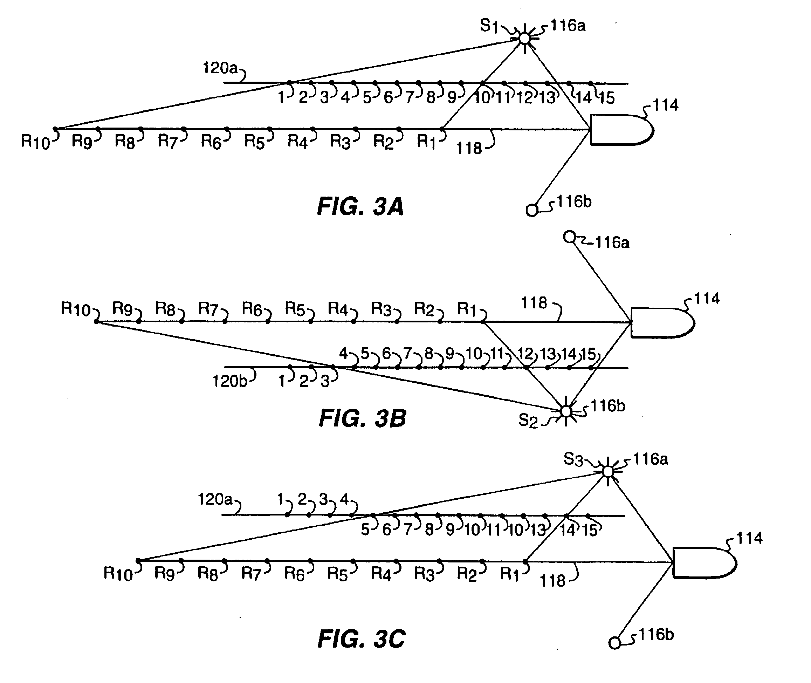

FIGS. 3A through 3C are plan views of a simple 3-D marine seismic survey in which the seismic vessel 114 tows two laterally-offset seismic sources 116a and 116b and one in-line seismic receiver cable 118 containing a plurality of seismic receivers $R_1$ through $R_{10}$. This data acquisition geometry results in acquisition of data traces for two CMP lines 120a and 120b. As is well known in the art, seismic sources 116a and 116b cannot be fired simultaneously as it would be virtually impossible to separate the data generated by source 116a from the data generated by source 116b. Therefore, the dual sources are typically fired at alternating source locations.

In FIG. 3A, source 116a fires a first shot $S_1$ which is received by seismic receivers $R_1$ through $R_{10}$ resulting in a total of ten data traces. These data traces are assigned to midpoint locations on CMP line 120a. In other words, the data trace recorded by receiver $R_1$ is assigned to midpoint location 10 on CMP line 120a; the data trace recorded by receiver $R_2$ is assigned to midpoint location 9 on CMP line 120a; and so on.

In FIG. 3B, the seismic vessel 114 has advanced a distance equal to the receiver spacing and a second shot $S_2$ is fired by the second seismic source 116b. The signal is again received by receivers $R_1$ through $R_{10}$ resulting in ten data traces. In this case, however, these data traces are assigned to midpoint locations on CMP line 120b.

In FIG. 3C, the seismic vessel 114 has again advanced a distance equal to the receiver spacing and a third shot $S_3$ is fired by the first seismic source 116a. The resulting data traces are assigned to midpoint locations falling on CMP line 120a.

From the point of view of imaging, using dual sources doubles the number of CMP lines acquired per pass of the seismic vessel, but halves the fold on each of these CMP lines. For 3-D acquisition, this is considered necessary in order to reduce the time (and, consequently, the cost) required for the survey.

FIG. 4 is a stacking chart for CMP line 120a. The impact of the dual-source acquisition geometry can be clearly seen in that the chart is only one quarter full. This is because the data generated by the second seismic source 116b are on a different stacking chart (i.e., the one for CMP line 120b) (not shown). Only data from shot $S_1$ (diagonal line 122), data from shot $S_3$ (diagonal line 124), and data from other shots (before $S_1$ and after $S_3$) by seismic source 116a are included in FIG. 4. Also, a given common-offset section or CMP gather in FIG. 4 has a trace every fourth position, since the pattern number for the dual-source acquisition is 4. This low sampling of CMP's can cause problems during stacking operations, and the low sampling of common offsets can cause problems for DMO or prestack migration.

*Wavefield Reconstruction*

The present invention is a method for reconstructing seismic wavefields. As used herein, a "wavefield" is a component of seismic data which can be represented by a single velocity field with vertical and lateral variations. Typically, seismic data consist of several wavefields (e.g., primary reflections, water-bottom multiples, peg-leg multiples, shear waves, ground roll, etc.) which are described by different velocity fields.

Basically, wavefield reconstruction is spatial interpolation of prestack seismic data using deterministic, wave-equation-based techniques. Spatial interpolation is a way of preventing spatial aliasing during stacking caused by under sampling of data in the imaging domain. As is well known to persons skilled in the art, spatial aliasing occurs when a higher frequency wraps around the folding frequency to a lower frequency due to violation of the Nyquist sampling condition. When a signal is under sampled, one input frequency yields the same output samples as a similar signal at another frequency, (i.e., the frequencies are "aliases" of each other).

In wavefield reconstruction, a single designated wavefield is reconstructed from the input data. The designated wavefield can be reconstructed for recorded trace locations, as well as for trace locations which were not recorded. Recorded data from other offsets and CMPs are used in the reconstruction. If the reconstructed wavefield is a secondary wavefield (i.e., not the primary wavefield of interest), it can be subtracted from the recorded traces in order to remove interference between wavefields. Wavefield reconstruction may be used to reconstruct missing data in both 2-D and 3-D seismic data.

Wavefield reconstruction has been found to be particularly effective for attenuation of high amplitude water-bottom or peg-leg multiples which obscure primary reflections of interest. First, the multiple wavefield is reconstructed and subtracted from the recorded data. Then, the primary wavefield is reconstructed from these almost multiple-free input data. The primary reconstruction further attenuates the contribution of multiples and other unwanted wavefields.

Wavefield reconstruction is deterministic, so it is robust in the presence of high amplitude coherent noise. It is based on wave propagation theory and properly handles dipping reflectors, curved reflectors, and diffractions. Moreover, wavefield reconstruction can de-alias data that are severely aliased (i.e., wrapped more than once). The deterministic nature of wavefield reconstruction also leads to computational efficiency since the operator that interpolates the data is predetermined.

The wavefield reconstruction technique is based in part on a 1987 paper by Ronen (Ronen, J., "Wave-equation trace interpolation," Geophysics, Vol. 52, No. 7, July 1987, pp. 973-974). Ronen demonstrated that DMO could be used to connect data collected at different offsets with sampling theory to unravel aliasing due to under sampling of the individual offsets. Ronen's theory, however, deals only with de-aliasing of the final stacked image, and it uses a DMO operator that does not preserve amplitudes. Further, Ronen made an erroneous assumption concerning how seismic data are collected. The wavefield reconstruction technique extends Ronen's theory by deriving an operator that preserves amplitudes and applying the technique to prestack data.

The wavefield reconstruction technique is also based in part on a 1993 paper by Black et al. (Black, J. L., Schleicher, K.L., and Zhang, L., "True-amplitude imaging and dip moveout," presented at the 58th Annual International Meeting of the Society of Exploration Geophysicists, 1993). Black et al. discuss a theory for true amplitude DMO. This theory was developed assuming that each of the offsets is perfectly sampled, and Black et al. do not address any aliasing which can result from sparse sampling. The wavefield reconstruction technique expands on the Black et al. theory by converting data from any offset into any other offset.

It will be immediately apparent to persons skilled in the art that the present invention should preferably be practiced using a digital computer. Any such person could readily develop computer software for performing the wavefield reconstruction method based on the teachings set forth herein.

The following detailed description will illustrate application of wavefield reconstruction in the context of a marine 3-D seismic survey. It should be understood, however, that wavefield reconstruction may be used to reconstruct seismic wavefields in any type of seismic data. For example, wavefield reconstruction could be used to reconstruct missing data traces in a land-based seismic survey caused by faulty receivers or topographic obstructions. Accordingly, to the extent that the following detailed description is specific to a particular embodiment or a particular use of the invention, this is intended to be illustrative and is not to be construed as limiting the scope of the invention.

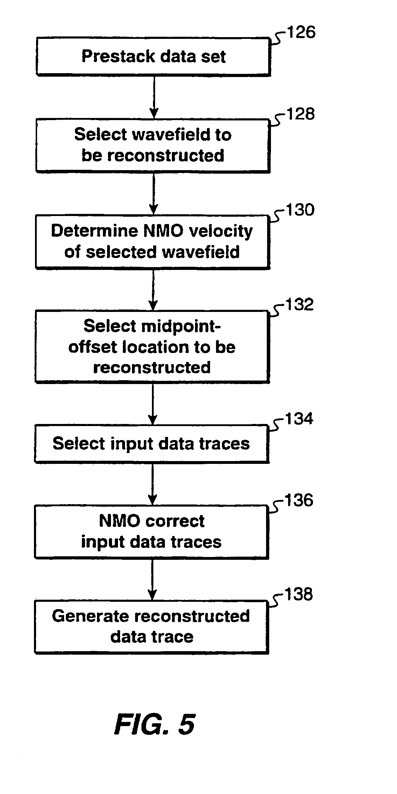

FIG. 5 is a flowchart illustrating one embodiment of the wavefield reconstruction invention. The inventive method begins with a prestack seismic data set 126. As noted above, this data set may be any type of seismic data.

The first step of the method is to select the seismic wavefield to be reconstructed (reference numeral 128). This wavefield may be either a primary wavefield or a secondary wavefield such as a water-bottom multiple wavefield. If more than one wavefield is to be reconstructed, then the method should be repeated for each selected wavefield.

The normal moveout (NMO) velocity of the selected wavefield is then determined (reference numeral 130). Techniques for determining the NMO velocity of the selected wavefield are well known in the art and will not be further described herein.

The wavefield reconstruction method operates in midpoint-offset space. In other words, the method will reconstruct the selected wavefield at a specific common midpoint and offset location. Therefore, the next step of the method is to select the midpoint-offset location to be reconstructed (reference numeral 132). Persons skilled in the art will understand that step 132 could be performed prior to the selection of the wavefield to be reconstructed (step 128) without adversely affecting the results obtained. Accordingly, such reversed order will be deemed to be within the scope of the invention.

The input data traces to be used in the reconstruction are selected at step 134. As the input traces become more and more remote from the reconstruction location, their effect on the reconstructed trace becomes smaller and smaller. Therefore, the selected traces preferably should be reasonably proximate to the midpoint-offset location to be reconstructed. If possible, the selected data traces should be located within a window of midpoint-offset locations centered at the reconstruction location.

Ideally, the midpoint-offset location to be reconstructed should be surrounded by actual data traces that are used for the reconstruction. As noted above, the minimum number of midpoints and offsets needed for the reconstruction is equal to the pattern number. If larger windows are used, the reconstructed trace should be scaled by the pattern number divided by the number of offsets used for the reconstruction. In general, it is preferable to use an integer multiple of the pattern number for the number of input offsets. In other words, preferably

$$|\Delta\text{offset}|_{\text{max}} = C n_{\text{pattern}} \Delta x_r \,,$$

where $|\Delta\text{offset}|_{\text{max}}$ is the maximum difference in offsets between any input data trace and the reconstruction location, C is a positive integer, $n_{\text{pattern}}$ is the pattern number, and $\Delta x_r$ is the receiver interval.

Once the range of midpoints and offsets to be used in the reconstruction has been selected, only a restricted portion of the data in the window contribute to the reconstruction. With the origin at the reconstruction location, the equation $\Delta\text{midpoint}=\pm\Delta\text{offset}/2$ defines two diagonal lines in the midpoint-offset space. Only data traces that lie horizontally between these two diagonal lines contribute to the reconstruction. In other words, the input data traces to be used for the reconstruction will satisfy the following equation:

$$|\Delta\text{midpo int}| \le \frac{|\Delta\text{offset}|}{2} \,,$$

where $|\Delta\text{midpoint}|$ is the difference in midpoint locations between the input data trace in question and the reconstruction location and $|\Delta\text{offset}|$ is the difference in offsets between the input data trace in question and the reconstruction location.

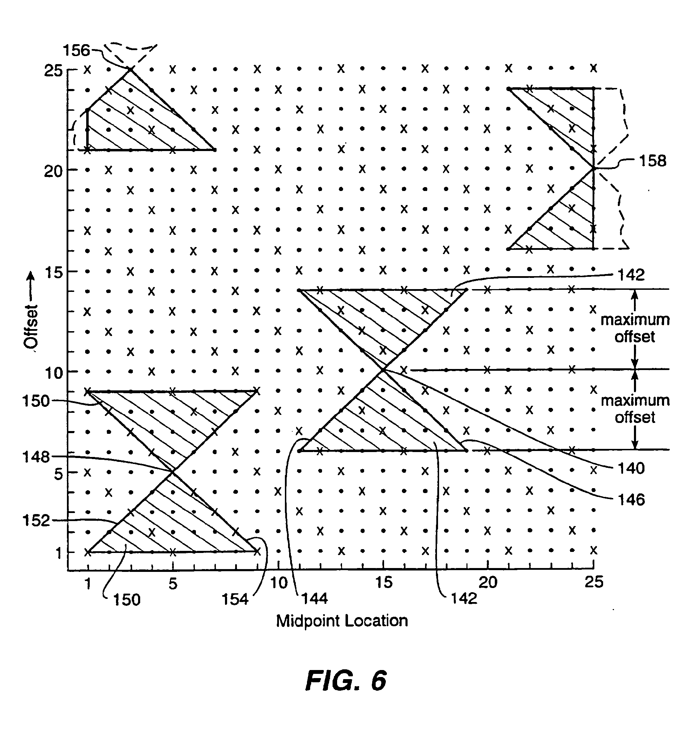

These concepts are illustrated in FIG. 6 which is a stacking chart for a dual source, single receiver cable marine 3-D seismic survey. As described above, the pattern number for this type of survey is 4. For purposes of illustrating the invention, a total of 25 midpoints and 25 offsets are shown in the stacking chart, although persons skilled in the art will understand that a 3-D marine seismic survey typically contains many more midpoints and offsets than are shown in FIG. 6. The midpoints and offsets are numbered from 1 to 25 for convenience. The X's indicate midpoint-offset locations that contain actual data traces.

Assume that it is desired to reconstruct a selected wavefield at the (15,10) midpoint-offset location (reference numeral 140). The input traces for this reconstruction are the traces which fall into the hourglass-shaped area 142 centered at reconstruction location 140. Thus, the input data set for the reconstruction will consist of the ten data traces having midpoint-offset locations of (12,6), (16,6), (15,7), (14,8), (15,11), (14,12), (13,13), (17,13), (12,14), and (16,14). Hourglass-shaped area 142 is defined by (i) a preselected maximum $\Delta$offset which, as noted above, must be at least equal to the pattern number times the receiver interval and, preferably, is an integer multiple of the pattern number times the receiver interval and (ii) the two diagonal lines 144 and 146 which satisfy the $\Delta\text{midpoint}=\pm\Delta\text{offset}/2$ equation. In FIG. 6, the pattern number is 4 and the integer multiplier is 1.

In actual data processing operations, the integer multiplier typically falls between 3 and 10, although larger or smaller multipliers may be used if desired. If the integer multiplier is greater than 1, then the output of the reconstruction should be divided by the multiplier in order to preserve the amplitudes of the data.

The wavefield reconstruction technique may be used to reconstruct both missing data traces and actual data traces. Assume that it is desired to reconstruct the water-bottom multiple wavefield for the actual data trace at the (5,5) midpoint-offset location (reference numeral 148). In this case, data traces falling in the hourglass-shaped area 150 would be used to reconstruct the desired wavefield, except that the actual data trace at the reconstruction location (5,5) should not be used. Area 150 would be defined in the same manner as described above for area 142. If desired, traces falling on diagonal lines 152 and 154 can be ignored.

At the extremes of offset or midpoint it is not possible to symmetrically surround the reconstruction location with actual data traces. For example, when reconstructing a wavefield at the (3,25) midpoint-offset location (reference numeral 156) or the (25,20) midpoint-offset location (reference numeral 158), it is not possible to use a full hourglass-shaped area since it would extend beyond the edges of the stacking chart. For this reason, the accuracy of the reconstruction near the edges of the stacking chart is less than ideal. Nevertheless, the results obtained near the survey edges appear to be quite acceptable.

Returning now to FIG. 5, after the input data traces have been selected (step 130), they must be normal moveout (NMO) corrected (step 136) using the NMO velocity of the wavefield to be reconstructed (step 130). The NMO-corrected input traces are then used to generate a reconstructed data trace at the reconstruction location (step 138), using a reflection point mapping technique which will be described below. The reconstructed data trace represents the selected wavefield at the reconstruction location.

In many cases, it may be desired to reconstruct a wavefield at all or a large portion of the trace locations in the survey. For example, assume that it is desired to remove water-bottom multiples from the data shown in FIG. 6 and to generate reconstructed traces at all of the vacant midpoint-offset locations so that subsequent data processing operations will not be subject to spatial aliasing. The first step would be to reconstruct the water-bottom multiple wavefield (using the NMO velocity of the water-bottom multiples) at all of the actual trace locations (X's) in FIG. 6. The resulting water-bottom multiple traces are then subtracted from the actual traces to obtain nearly multiple-free data traces. Next, the primary wavefield is reconstructed (using the NMO velocity of the primary reflections) at all of the vacant midpoint-offset locations using the multiple-free data traces as inputs to the reconstruction. It may be desirable to use a median filter (or other signal processing technique) to suppress any residual primary reflections after the multiples reconstruction so that no primary reflections are deleted when the multiples are subtracted from the actual data traces. This process results in an almost multiple-free data set with a full stack array.

*Mapping Algorithm*

The reconstructed data trace is generated by mapping each data sample on each of the NMO-corrected input data traces onto its corresponding location on the reconstructed data trace. Initial development of the wavefield reconstruction theory led to the following mapping algorithm:

$$P(t_m, y_m, h_m) = G\left[d_{1/2}\left(\text{sign}(h_m - h_n)t_n\right)P(t_n, y_n, h_n)\right],$$

where

$P(t_m, y_m, h_m)$    is the data sample at a given time, midpoint, and half offset on the reconstructed data trace (half offsets are preferably used in order to make the equation symmetric),

$P(t_n, y_n, h_n)$    is the input data sample at a given time, midpoint, and half offset being mapped onto the reconstructed data trace,

$$G = g\left[\frac{2A_n^2(k_s) - 1}{A_n^3(k_s)} \frac{A_m^3(k_s)}{2A_m^2(k_s) - 1} \frac{t_m^{1/2}}{\sqrt{4\pi h_m(h_n - h_m)}\left[1 - \frac{(y_m - y_n)^2}{(h_m - h_n)^2}\right]^{3/4}}\right],$$

$$d_{1/2}\left(\text{sign}(h_m - h_n)t_n\right) = \frac{1}{2\pi}\int d\omega_m \left(\text{sign}(h_n - h_m)j\omega_m\right)^{1/2} e^{-j\omega_m t_n},$$

g is a       constant multiplier empirically determined from model data which is used to scale the amplitude of the data sample on the reconstructed data trace,

$$j = \sqrt{-1},$$

$$k_s = \frac{t_m \omega_m}{2h_m} \sqrt{\frac{(y_m - y_n)^2}{(h_m - h_n)^2 - (y_m - y_n)^2}};$$

$\omega_m$ = angular frequency conjugate to $t_m$,

$$A_m(k_s) = \left[1 + \frac{h_m^2}{A_m^2(k_s)t_m^2}\left(\frac{k_s}{\omega_m}\right)^2\right]^{1/2},$$

and

$$A_n(k_s) = \frac{t_n}{t_m} A_m(k_s).$$

The time of the input data sample $t_n$ may be related to the time of the reconstructed data sample $t_m$ according to the following equation:

$$t_n = t_m \sqrt{\frac{h_n}{h_m}} \sqrt{1 - \frac{h_n - h_m}{h_n}} \sqrt{1 - \left(\frac{y_m - y_n}{h_n - h_m}\right)^2}$$

Alternatively, the time of the input data sample $t_n$ may be related to the time of the reconstructed data sample $t_m$ according to the following equations:

$$\text{if } h_m > h_n, \text{ then } t_n = t_m \frac{\sqrt{\dfrac{U+V}{2}}}{|h_m|},$$

or

$$\text{if } h_n > h_m, \text{ then } t_n = t_m |h_n| \sqrt{\frac{2}{U+V}},$$

where

$$U = h_n^2 + h_m^2 - \left(y_m - y_n\right)^2$$

and

$$V = \sqrt{U^2 - \left(2h_n h_m\right)^2} \; .$$

The above algorithm is applied to each data sample on the input data trace, and then to each data sample on all of the other input data traces. The results are scaled (by the "G" factor of the mapping algorithm) and then summed to generate the reconstructed data trace.

## Modified Mapping Algorithm

Subsequent mathematical development of the wavefield reconstruction theory has led to a slightly modified mapping algorithm. The following equation represents the Fourier transform over time and midpoint of the data sample $W(t_1, x_1, h_1)$:

$$W(f, k, h_2) = \iint dt_1 dx_1 J_{21} \exp\left(-i2\pi\left\{f\frac{A_2}{A_1}t_1 - k\left[x_1 - D\left(\frac{h_1^2}{A_1 t_1} - \frac{h_2^2}{A_2 t_2}\right)\right]\right\}\right)W(t_1, x_1, h_1),$$

where

$$J_{21} = J_{21}(D, t_2, h_2, t_1, h_1) = \begin{vmatrix} \dfrac{\partial t_2}{\partial t_1} & \dfrac{\partial t_2}{\partial x_1} \\ \dfrac{\partial x_2}{\partial t_1} & \dfrac{\partial x_2}{\partial x_1} \end{vmatrix} = \begin{vmatrix} \dfrac{\partial t_2}{\partial t_1} & 0 \\ \dfrac{\partial x_2}{\partial t_1} & 1 \end{vmatrix} = \frac{\partial t_2}{\partial t_1} \; ,$$

$$A_1 = A_1(D, t_1, h_1) = \sqrt{1 + \left(\frac{Dh_1}{t_1}\right)^2} \; ,$$

and

$$A_2 = A_2(D, t_2, h_2) = \sqrt{1 + \left(\frac{Dh_2}{t_2}\right)^2}$$

In the above equations, D is the time dip on a zero offset section given by

$$D = 2\sin\alpha/V \; ,$$

where $\alpha$ is the dip angle in the plane of the section and V is the medium velocity.

By inverse Fourier transforming, we obtain the wavefield at offset $h_2$ in terms of the wavefield at offset $h_1$ as follows:

$$W(t_2,x_2,h_2) = \iint dfdk \iint dt_1 dx_1 J_{21} \exp\left(-i2\pi\left\{f\left(\frac{A_2}{A_1}t_1 - t_2\right) - k\left[x_1 - D\left(\frac{h_1^2}{A_1t_1} - \frac{h_2^2}{A_2t_2}\right) - x_2\right]\right\}\right) W(t_1,x_1,h_1).$$

To derive a Kirchhoff implementation, we will apply the method of stationary phase to the f-k integrals in the above equation. In particular we will first approximate the k integral, since the dependence on k does not involve singularities and the transformation is offset invariant. The choice of the k integral for approximation is not arbitrary. The frequency integral involves singularities due to the presence of 1/f in the A factors. The t, integral involves singularities due to the presence of $1/t_1$ in $A_1$. The integral over x, is just a Fourier transform and needs no approximation.

The stationary phase approximation requires the phase to vary rapidly as k varies as follows:

$$\left|\frac{\Phi}{2\pi}\right| = \left|fA_2(A_1t_1 - A_2t_2) - k(x_1 - x_2)\right| >> 1.$$

Application of these equations leads to the following modified mapping algorithm:

$$W(t_2,x_2,h_2) \approx g\int dx_1 \sqrt{\frac{1}{\left|\frac{\partial^2\Psi}{\partial\kappa^2}(\kappa_s)\right|}} \frac{J_{21}(\kappa_s)}{\left|\frac{\partial\Psi(\kappa_s)}{\partial t_1}\right|} \sqrt{\frac{A_1}{A_2}} W^{(1/2)}\left(\text{sign}(h_2 - h_1)\frac{A_1}{A_2}t_2, x_1, h_1\right)$$

where

$W(t_2, x_2, h_2)$ is the data sample at a given time, midpoint, and half offset on the reconstructed data trace,

g is a constant multiplier empirically determined from model data which is used to scale the amplitude of the data sample on the reconstructed data trace,

$$W^{(1/2)}\left(\text{sign}(h_2 - h_1)\frac{A_1}{A_2}t_2, x_1, h_1\right)$$

is the input data sample after application of a square-root derivative operator,

$$\kappa_s = \frac{\frac{A_2}{A_1}(A_2^2 - A_1^2)t_1}{x_2 - x_1},$$

$$\frac{\partial^2 \Psi}{\partial \kappa^2}(\kappa_s) = 2\pi t_1 \left\{ 2\frac{A_2}{A_1}\left( A_2\frac{\partial^2 A_2}{\partial \kappa^2} + \left(\frac{\partial A_2}{\partial \kappa}\right)^2 \right) - \left( \frac{\partial^2 A_2}{\partial \kappa^2}A_1 + 2\frac{\partial A_2}{\partial \kappa}\frac{\partial A_1}{\partial \kappa} + A_2\frac{\partial^2 A_1}{\partial \kappa^2} \right) \right\}_{\kappa_s},$$

$$\frac{\partial A_2}{\partial \kappa}(\kappa_s) = \frac{A_1^2}{A_2^3}\frac{1}{2A_2^2-1}\left(\frac{h_2}{t_1}\right)^2 \kappa_s,$$

$$\frac{\partial^2 A_2}{\partial \kappa^2}(\kappa_s) = \frac{A_1^2}{A_2^3}\frac{1}{2A_2^2-1}\left(\frac{h_2}{t_1}\right)^2\left(1 - \left(\frac{1}{A_2^2} + \frac{4}{(2A_2^2-1)^2}\right)\frac{A_1^2/A_2^2}{2A_2^2-1}\left(\frac{h_2}{t_1}\right)^2 \kappa_s^2\right),$$

$$\frac{\partial A_1}{\partial \kappa}(\kappa_s) = \left(\frac{h_1}{t_1}\right)^2\frac{1}{A_1}\frac{1}{A_2^2}\left(\kappa_s - \frac{A_1^2}{A_2^4(2A_2^2-1)}\left(\frac{h_2}{t_1}\right)^2 \kappa_s^3\right),$$

$$\frac{\partial^2 A_1}{\partial \kappa^2}(\kappa_s) = \left(\frac{h_1}{t_1}\right)^2\frac{1}{A_1 A_2^2}H(\kappa_s),$$

$$H(\kappa_s) \equiv \left\{ \left[ 1 - \frac{\left(\frac{h_1}{t_1}\right)^2(2A_2^2-1) + \left(\frac{h_2}{t_1}\right)^2\frac{A_1^2}{A_2^2}}{A_1^2 A_2^2(2A_2^2-1)}\kappa_s^2 + \frac{\frac{A_1^2}{A_2^2}\left(\frac{h_1 h_2}{t_1^2}\right)^2}{A_1^2 A_2^2(2A_2^2-1)}\kappa_s^4 \right] - \right.$$

$$\left. \frac{A_1^2\left(\frac{h_2}{t_1}\right)^2 \kappa_s^2}{A_2^4(2A_2^2-1)}\left[ 3 - \frac{\left(\frac{h_1}{t_1}\right)^2(2A_2^2-1)^2 + 4\left(\frac{h_2}{t_1}\right)^2\frac{A_1^4}{A_2^2}(3A_2^2-1)}{A_1^2 A_2^2(2A_2^2-1)^2}\kappa_s^2 + \frac{\frac{A_1^2}{A_2^2}\left(\frac{h_1 h_2}{t_1^2}\right)^2}{A_1^2 A_2^4(2A_2^2-1)}\kappa_s^4 \right] \right\},$$

$$A_1 = \sqrt{h_1^2 \frac{U+V-2h_2^2}{V(U+V)}} \quad \text{if } h_2 < h_1,$$

$$A_1 = \sqrt{\frac{1}{2}\frac{U+V-2h_1^2}{V}} \quad \text{if } h_2 > h_1,$$

$$A_2 = \sqrt{\frac{h_1^2}{2}\frac{U+V-2h_2^2}{V}} \quad \text{if } h_2 < h_1,$$

$$A_2 = \sqrt{\frac{U+V-2h_1^2}{V(U+V)}} \quad \text{if } h_2 > h_1,$$

$$U \equiv h_1^2 + h_2^2 - \left(x_2 - x_1\right)^2,$$

$$V \equiv \sqrt{U^2 - 4h_1^2 h_2^2},$$

and

$$\frac{J_{21}}{\left|\dfrac{\partial \Psi}{\partial t_1}\right|} = \frac{2A_1^2 - 1}{A_1^4}\frac{A_2^2}{2A_2^2 - 1}.$$

The square-root-derivative operator (also known as a rho filter) which is applied to the input data sample is defined by the following equation:

$$\hat{\partial}^{1/2}(\pm t)G(t) = G^{(1/2)}(\pm t) \equiv \int df\, e^{i2\pi ft}\sqrt{\pm i2\pi f}\,G(f).$$

Use of either the original mapping algorithm or the modified mapping algorithm produces acceptable results. Persons skilled in the art may be able to generate other modified algorithms which also produce acceptable results. Such algorithms shall be deemed to be within the scope of the present invention to the extent that they generate a reconstructed data trace by mapping each data sample on each of the NMO-corrected input data traces onto its corresponding location on the reconstructed data trace.

### *Offset-Borrowing Reconstruction*

Offset-borrowing reconstruction is an inexpensive approximation to wavefield reconstruction which may be used with either 2-D or 3-D seismic data. In offset-borrowing reconstruction, only two input data traces are used in the reconstruction. These two input traces are (i) the trace having the same midpoint and the nearest offset greater than the reconstruction location and (ii) the trace having the same midpoint and the nearest offset less than the reconstruction location. In other words, the two input traces and the reconstruction location all fall on the same midpoint (vertical) line in a stacking chart (e.g., FIG. 6), and the input traces used in the reconstruction are the nearest traces above and below the reconstruction location.

In offset-borrowing reconstruction, the reconstructed trace is generated by simply copying weighted versions of the two input traces (after NMO correction) to the reconstruction location and summing them. Preferably, differences in offset distribution are handled by tapering the interpolation using cosine weights based on the separation between the input traces. The weight starts at a value of one at the input trace location in question and tapers down to a value of zero at the other input trace location. Following the reconstruction, the NMO correction is removed and the reconstructed data trace may then be used just like an actual data trace in subsequent data processing operations.

Offset-borrowing reconstruction is preferably used in conjunction with DMO to remove secondary wavefields (e.g., water-bottom multiples) and eliminate aliasing problems. First, offset-borrowing reconstruction is used to reconstruct the secondary wavefield. Then, DMO is applied to reconstruct the primary wavefield. This procedure produces a nearly continuous secondary wavefield which does not alias during stack. In this procedure, stack is the process which attenuates the secondary wavefield.

The offset-borrowing reconstruction process, however, can have an adverse impact on the primary reflections, especially those with higher frequencies. This occurs because the NMO process causes time shift errors which distort the primaries. The high frequencies are affected most, since a time shift error corresponds to a larger fraction of the wavelength for higher frequencies. The primary reflections can be protected by using a muting process based on the following equation:

$$t_{NMO} = C_{mute} \left| f_{max} \, h\Delta h \left( \left( \frac{\cos\alpha}{V} \right)^2 - \frac{1}{V_{NMO}^2} \right) \right|,$$

where $T_{NMO}$ is the arrival time after NMO, $C_{mute}$ is a constant typically equal to 8, $f_{max}$ is the maximum frequency which is still in phase (i.e., within half a cycle) after NMO, h is the offset of the input data trace, $\Delta h$ is the change in offset between the input data trace and the reconstruction location, $\alpha$ is the angle of reflector dip, V is the primary root-mean-square (RMS) velocity, and $V_{NMO}$ is the normal moveout velocity of the selected wavefield. The above equation yields a minimum arrival time for given $f_{max}$, $x_h$, $\Delta x_h$, dip, and velocities which will still have primary energy in phase during the reconstruction. Times earlier than this time will add primary energy out of phase. This can only be prevented by turning off the interpolation for these earlier times, which leaves the reconstructed trace muted down to the time given by the above equation.

### *Example 1*

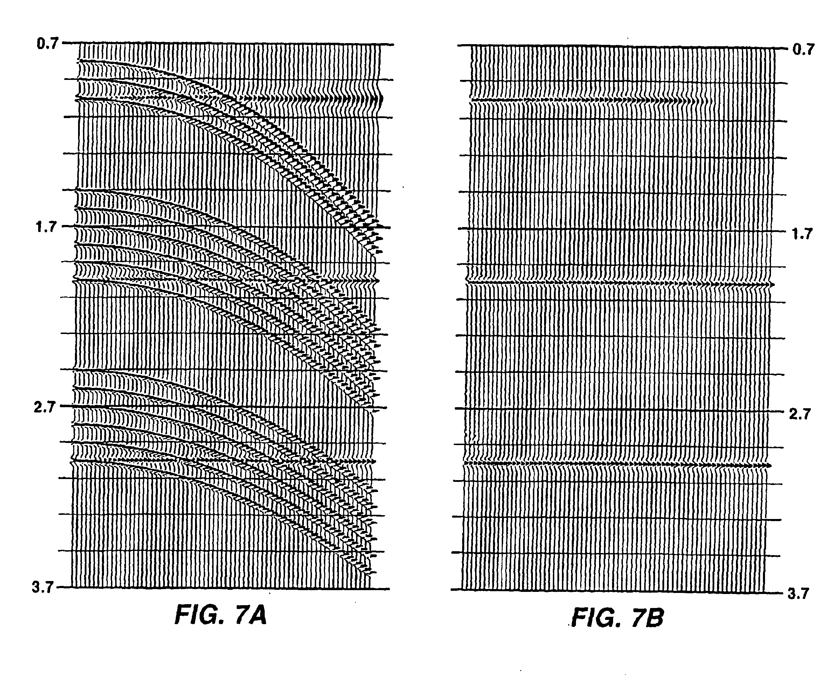

This example illustrates the use of wavefield reconstruction to remove water-bottom multiples from a model data set. FIG. 7A shows a CMP gather for the model before wavefield reconstruction. The model data set had 135 traces per record, a station spacing of 25 meters, a shot spacing of 25 meters, and the near trace at 335 meters. Shots were consecutively numbered to be consistent with 25 meter spacing and can be selected on input to simulate a larger shot spacing. There are three primaries at one, two, and three seconds with a peak amplitude of unity. The velocities for these primaries are 1700, 2000, and 2500 meters per second, respectively. Each of these primaries is covered by water-bottom multiples having an identical velocity of 1480 meters per second. The first primary is covered by multiples starting at 0.8, 0.9, and 1.0 seconds; the second primary has interference from multiples starting at 1.5, 1.6, 1.7, 1.8, 1.9, and 2.0 seconds; and the third primary is covered by multiples starting at 2.5, 2.6, 2.7, 2.8, 2.9, and 3.0 seconds. The model has a multiple-to-primary amplitude ratio of two-to-one.

FIG. 7B shows the same gather after wavefield reconstruction to remove the water-bottom multiples. The wavefield reconstruction processing was accomplished using a shot spacing of 75 meters (i.e., three times the shot spacing of the original model) while 49 offsets and CMP's were used for the reconstruction. The model was processed first to reconstruct the multiples (starting with shot 1). When the multiples were reconstructed a median filter was applied to smooth the multiple estimate and further eliminate any residual primary. This reconstruction and median filter procedure was then repeated two more times starting on shot 2 and shot 3, respectively, so that all shots were included in the reconstruction. Then the three output data sets were averaged together. This average result was then subtracted from the input data, and the resulting data set was used as the input for primary reconstruction. The primaries were also reconstructed three times so that all the data were used. No median filter was used after reconstruction of the primaries. These results were averaged to give the results seen in FIG. 7B. It can be clearly seen that the water-bottom multiples have been virtually eliminated from the model data set. A small amount of residual energy from the multiples is visible at the near offsets. This is the result of a lack of moveout differences at small offsets.

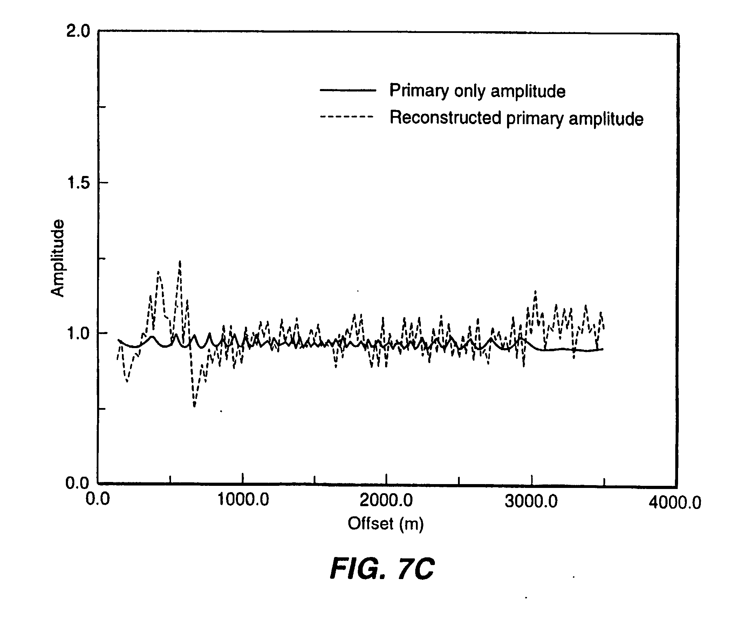

The wavefield reconstruction technique preserves the amplitudes of the reconstructed data. This is illustrated in FIG. 7C which is a plot of amplitude with offset for the reflector at 3.0 seconds in FIGS. 7A and 7B. The solid line shows the true peak primary amplitudes and the dotted line shows the reconstructed primary amplitudes. Little error can be seen except at near offsets where the NMO correction is less effective in separating the primary energy from the multiple energy.

### Example 2

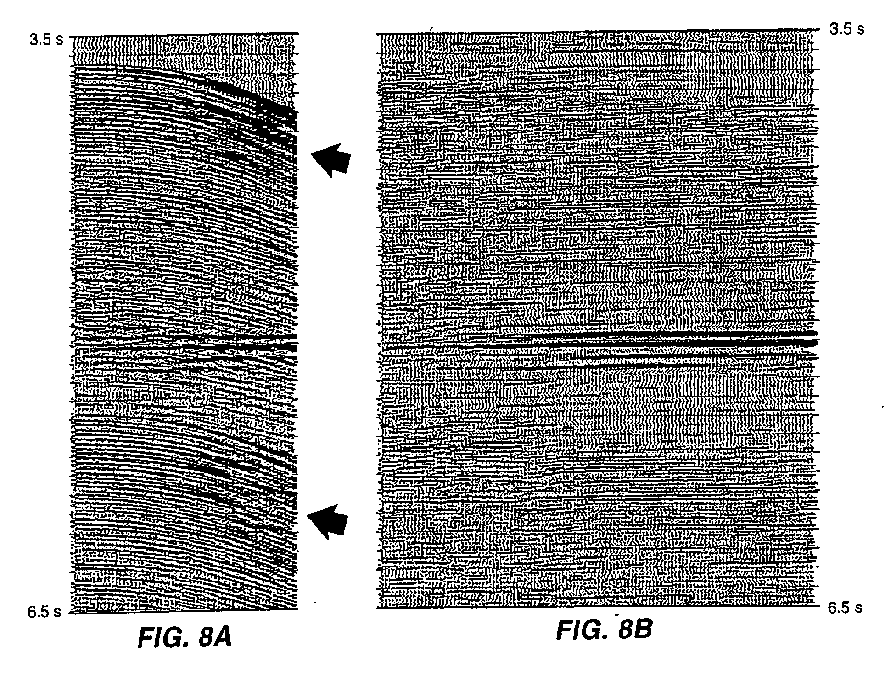

This example illustrates the use of both wavefield reconstruction and offset-borrowing reconstruction on an actual marine seismic data set. FIG. 8A shows an original CMP gather from a marine seismic survey. The first water-bottom multiple is seen at just below 3.6 seconds, and a subsequent water-bottom multiple is also apparent in the gather, as indicated by the arrows. The water-bottom multiples and peg-leg multiples were very apparent during velocity analysis, and two reconstructions were necessary to remove them from the data. Two reconstructions were needed because the water-bottom multiples and peg-leg multiples have different NMO velocities, and wavefield reconstruction reconstructs a single wavefield having a specified NMO velocity. One reconstruction was made for the slower water-bottom multiples, and one for the faster peg-leg multiples. Only one-third of the data were used for the reconstruction (to simulate sparse sampling), and the results of these two reconstructions were subtracted from the input data prior to the primary reconstruction. These data had 120 channels, 25 meter station separation, and a near trace at 106 meters. The shot spacing was 25 meters, but 75 meter shot spacing was used when reconstructing both the multiples and the primaries (again, to simulate sparse sampling). In addition, 49 offsets and CMP's were used in all the reconstructions.

FIG. 8B shows the reconstructed CMP gather. There has been a dramatic improvement compared with the original CMP gather (FIG. 8A). Note that the reconstructed gather has more traces in the gather since all the shots are present in the reconstructed gather. This improvement is so dramatic that stacked results were obtained for this data set.

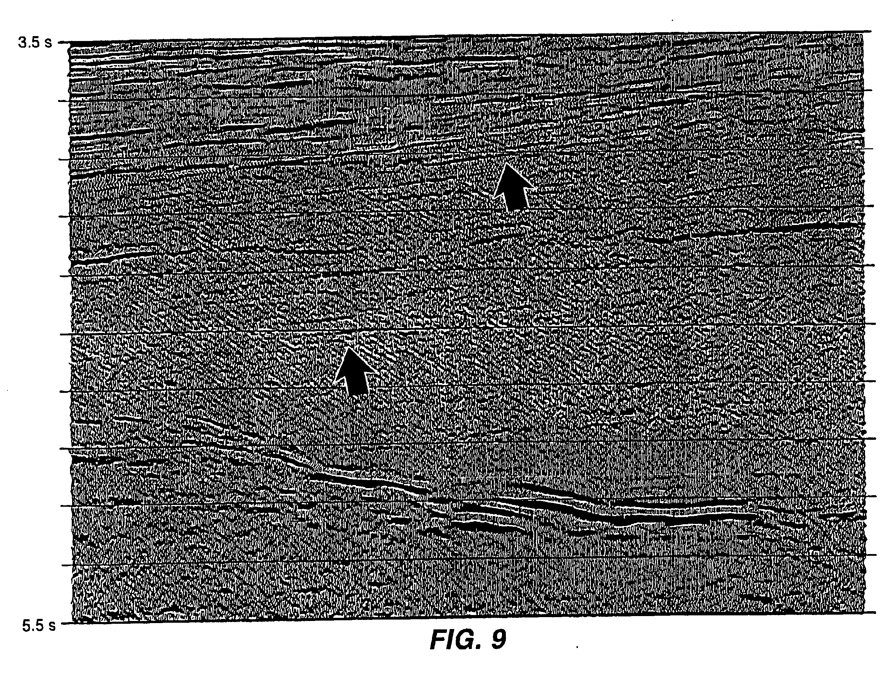

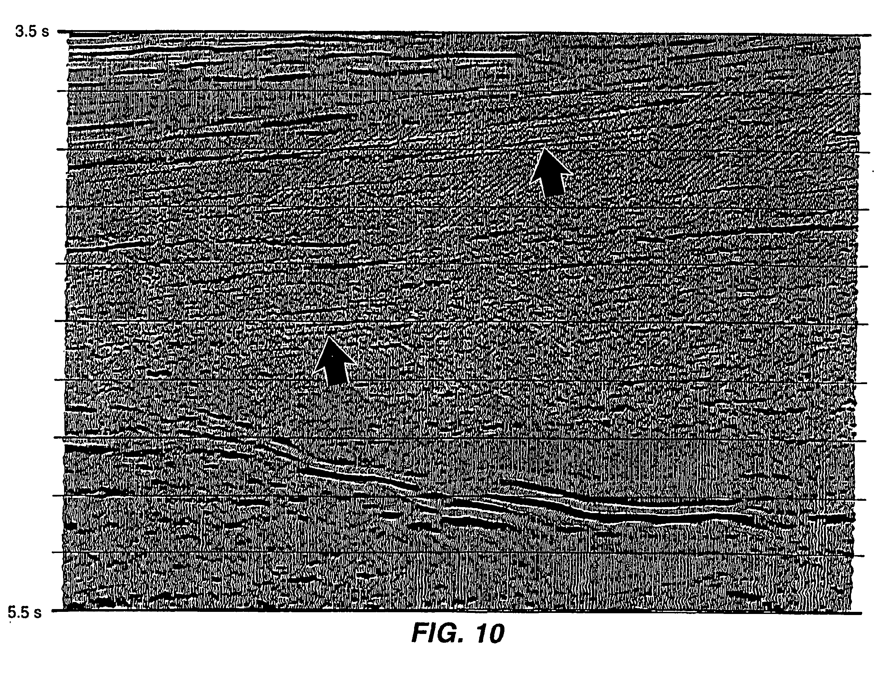

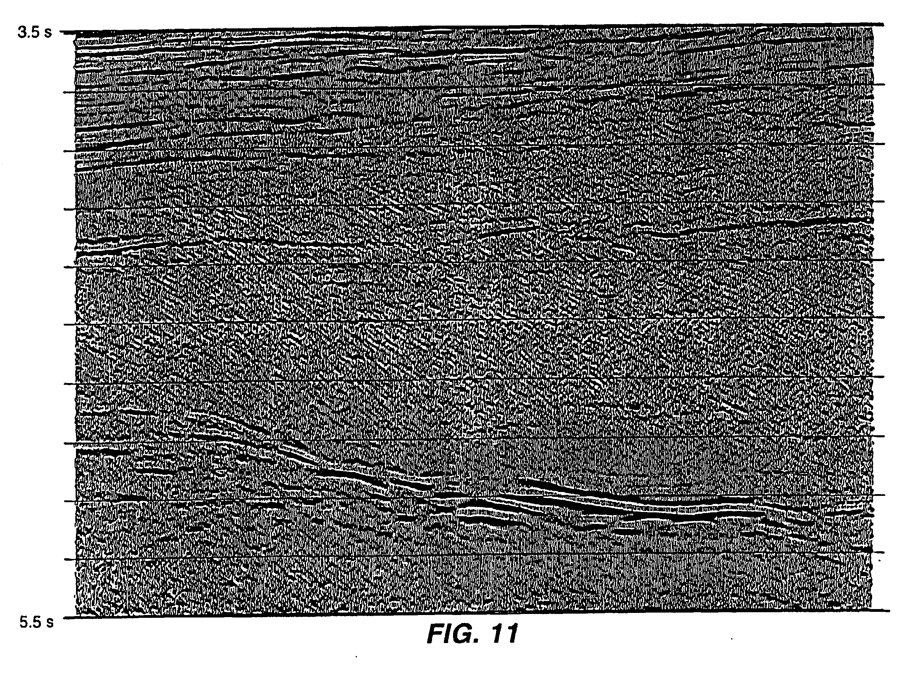

FIGS. 9 through 11 show how effectively the stacked image has been improved via wavefield reconstruction. FIG. 9 shows the brute stack with a 25 meter shot spacing. The residual water-bottom multiples can be seen as dipping events running across the section, as indicated by the arrows. FIGS. 10 and 11 show stacks using offset-borrowing reconstruction and wavefield reconstruction, respectively. The offset-borrowing reconstruction (using a 75 meter shot interval) did exactly what it is supposed to do -- it provided a stack that looks like the brute stack in FIG. 9 which had a 25 meter shot interval. Offset-borrowing reconstruction does not remove the multiples which can be clearly seen in FIG. 10. The wavefield reconstruction stack (FIG. 11) appears to be almost multiple free. Thus, it is clear that wavefield reconstruction is an effective way to remove multiples from sparsely sampled input data.

Persons skilled in the art will understand that wavefield reconstruction and offset-borrowing reconstruction are extremely versatile and may be used in a variety of ways and for a variety of purposes. Further, it should be understood that the invention is not to be unduly limited to the foregoing which has been set forth for illustrative purposes. Various modifications and alternatives will be apparent to those skilled in the art without departing from the true scope of the invention, as defined in the appended claims.

### Claims

1. A method for reconstructing a seismic wavefield at a designated common midpoint and offset location from a set of prestack seismic data traces obtained from a seismic survey, each of said seismic data traces being a time series of discrete samples of the seismic signal received by a seismic receiver, said method comprising the steps of:

   selecting the seismic wavefield to be reconstructed;
   determining the normal moveout velocity of said seismic wavefield;
   selecting a set of input data traces from said set of common midpoint seismic data traces, said input data traces having common midpoint and offset locations proximate to said designated location;

performing a normal moveout correction of said input data traces using said normal moveout velocity of said selected seismic wavefield; and

generating a reconstructed data trace representative of said seismic wavefield at said designated location by mapping each data sample on each of said normal moveout corrected input data traces onto its corresponding location on said reconstructed data trace.

2. The method of claim 1, wherein said seismic wavefield to be reconstructed is a primary wavefield.

3. The method of claim 1, wherein said seismic wavefield to be reconstructed is a secondary wavefield.

4. The method of claim 1, wherein said common midpoint and offset location of each input data trace differs from that of said designated location according to the following:

$$\left|\Delta\text{midpo int}\right| \le \frac{\left|\Delta\text{offset}\right|}{2}$$

where $\Delta$midpoint is the change in common midpoint location from said input data trace to said designated location and $\Delta$offset is the change in offset from said input data trace to said designated location.

5. The method of claim 4, wherein the maximum value of $\left|(\Delta\text{offset})/(2\Delta\text{midpoint})\right|$ is equal to an integer multiple of the pattern number for said seismic survey.

6. - The method of claim 1, wherein said reconstructed data trace is generated according to the following:

$$P(t_m, y_m, h_m) = G\left[d_{1/2}\left(\text{sign}(h_m - h_n)t_n\right)P(t_n, y_n, h_n)\right],$$

where

$P(t_m, y_m, h_m)$ is the data sample at a given time, midpoint, and half offset on the reconstructed data trace,
$p(t_n, y_n, h_n)$ is the input data sample at a given time, midpoint, and half offset being mapped onto the reconstructed data trace,

$$G = g\left[\frac{2A_n^2(k_s) - 1}{A_n^3(k_s)} \frac{A_m^3(k_s)}{2A_m^2(k_s) - 1} \frac{t_m^{1/2}}{\sqrt{4\pi h_m(h_n - h_m)}\left[1 - \frac{(y_m - y_n)^2}{(h_m - h_n)^2}\right]^{3/4}}\right],$$

$$d_{1/2}\left(\text{sign}(h_m - h_n)t_n\right) = \frac{1}{2\pi}\int d\omega_m \left(\text{sign}(h_n - h_m)j\omega_m\right)^{1/2} e^{-j\omega_m t_n},$$

g is a constant multiplier empirically determined from model data which is used to scale the amplitude of the data sample on the reconstructed data trace,

$$j = \sqrt{-1},$$

$$k_s = \frac{t_m \omega_m}{2h_m} \sqrt{\frac{(y_m - y_n)^2}{(h_m - h_n)^2 - (y_m - y_n)^2}} \, ,$$

$\omega_m \equiv$ angular frequency conjugate to $t_m$,

$$A_m(k_s) = \left[ 1 + \frac{h_m^2}{A_m^2(k_s)t_m^2} \left( \frac{k_s}{\omega_m} \right)^2 \right]^{1/2} ,$$

and

$$A_n(k_s) = \frac{t_n}{t_m} A_m(k_s) .$$

**7.** The method of claim 6, wherein the time of the input data sample $t_n$ is related to the time of reconstructed data sample $t_n$, according to the following:

$$t_n = t_m \sqrt{\frac{h_n}{h_m}} \sqrt{1 - \frac{h_n - h_m}{h_n}} \sqrt{1 - \left( \frac{y_m - y_n}{h_n - h_m} \right)^2}$$

**8.** The method of claim 6, wherein the time of the input data sample $t_n$ is related to the time of reconstructed data sample $t_m$ according to the following:

$$\text{if } h_m > h_n, \text{ then } t_n = t_m \frac{\sqrt{\dfrac{U + V}{2}}}{|h_m|} \, ,$$

or

$$\text{if } h_n > h_m, \text{ then } t_n = t_m |h_n| \sqrt{\frac{2}{U + V}} \, ,$$

where

$$U = h_n^2 + h_m^2 - (y_m - y_n)^2$$

and

$$V = \sqrt{U^2 - (2h_n h_m)^2}$$

9. The method of claim 1, wherein said reconstructed data trace is generated according to the following:

$$W(t_2, x_2, h_2) \approx g \int dx_1 \sqrt{\frac{1}{\left|\frac{\partial^2 \Psi}{\partial \kappa^2}(\kappa_s)\right|}} \frac{J_{21}(\kappa_s)}{\left|\frac{\partial \Psi(\kappa_s)}{\partial t_1}\right|} \sqrt{\frac{A_1}{A_2}} W^{(1/2)}\left(\text{sign}(h_2 - h_1)\frac{A_1}{A_2} t_2, x_1, h_1\right)$$

where

g is a constant multiplier empirically determined from model data which is used to scale the amplitude of the data sample on the reconstructed data trace,

$W(t_2, x_2, h_2)$ is the data sample at a given time, midpoint, and half offset on the reconstructed data trace,

$$W^{(1/2)}\left(\text{sign}(h_2 - h_1)\frac{A_1}{A_2} t_2, x_1, h_1\right)$$

is the input data sample after application of a square-root derivative operator,

$$\kappa_s = \frac{\frac{A_2}{A_1}(A_2^2 - A_1^2)t_1}{x_2 - x_1},$$

$$\frac{\partial^2 \Psi}{\partial \kappa^2}(\kappa_s) = 2\pi t_1 \left\{2\frac{A_2}{A_1}\left(A_2 \frac{\partial^2 A_2}{\partial \kappa^2} + \left(\frac{\partial A_2}{\partial \kappa}\right)^2\right) - \left(\frac{\partial^2 A_2}{\partial \kappa^2} A_1 + 2\frac{\partial A_2}{\partial \kappa}\frac{\partial A_1}{\partial \kappa} + A_2 \frac{\partial^2 A_1}{\partial \kappa^2}\right)\right\}_{\kappa_s},$$

$$\frac{\partial A_2}{\partial \kappa}(\kappa_s) = \frac{A_1^2}{A_2^3}\frac{1}{2A_2^2 - 1}\left(\frac{h_2}{t_1}\right)^2 \kappa_s,$$

$$\frac{\partial^2 A_2}{\partial \kappa^2}(\kappa_s) = \frac{A_1^2}{A_2^3}\frac{1}{2A_2^2 - 1}\left(\frac{h_2}{t_1}\right)^2 \left(1 - \left(\frac{1}{A_2^2} + \frac{4}{(2A_2^2 - 1)^2}\right)\frac{A_1^2/A_2^2}{2A_2^2 - 1}\left(\frac{h_2}{t_1}\right)^2 \kappa_s^2\right),$$

$$\frac{\partial A_1}{\partial \kappa}(\kappa_s) = \left(\frac{h_1}{t_1}\right)^2 \frac{1}{A_1} \frac{1}{A_2^2}\left(\kappa_s - \frac{A_1^2}{A_2^4(2A_2^2-1)}\left(\frac{h_2}{t_1}\right)^2 \kappa_s^3\right),$$

$$\frac{\partial^2 A_1}{\partial \kappa^2}(\kappa_s) = \left(\frac{h_1}{t_1}\right)^2 \frac{1}{A_1 A_2^2} H(\kappa_s),$$

$$H(\kappa_s) \equiv \left\{\left[1 - \frac{\left(\frac{h_1}{t_1}\right)^2 (2A_2^2 - 1) + \left(\frac{h_2}{t_1}\right)^2 \frac{A_1^2}{A_2^2}}{A_1^2 A_2^2 (2A_2^2 - 1)}\kappa_s^2 + \frac{\frac{A_1^2}{A_2^2}\left(\frac{h_1 h_2}{t_1^2}\right)^2}{A_1^2 A_2^2 (2A_2^2 - 1)}\kappa_s^4\right] - \right.$$

$$\left. \frac{A_1^2 \left(\frac{h_2}{t_1}\right)^2 \kappa_s^2}{A_2^4(2A_2^2 - 1)}\left[3 - \frac{\left(\frac{h_1}{t_1}\right)^2 (2A_2^2 - 1)^2 + 4\left(\frac{h_2}{t_1}\right)^2 \frac{A_1^4}{A_2^2}(3A_2^2 - 1)}{A_1^2 A_2^2 (2A_2^2 - 1)^2}\kappa_s^2 + \frac{\frac{A_1^2}{A_2^2}\left(\frac{h_1 h_2}{t_1^2}\right)^2}{A_1^2 A_2^4 (2A_2^2 - 1)}\kappa_s^4\right]\right\},$$

$$A_1 = \sqrt{h_1^2 \frac{U + V - 2h_2^2}{V(U + V)}} \quad \text{if } h_2 < h_1,$$

$$A_1 = \sqrt{\frac{1}{2}\frac{U + V - 2h_1^2}{V}} \quad \text{if } h_2 > h_1,$$

$$A_2 = \sqrt{\frac{h_1^2}{2}\frac{U + V - 2h_2^2}{V}} \quad \text{if } h_2 < h_1,$$

$$A_2 = \sqrt{\frac{U + V - 2h_1^2}{V(U + V)}} \quad \text{if } h_2 > h_1,$$

and

$$\frac{J_{21}}{\left|\frac{\partial \Psi}{\partial t_1}\right|} = \frac{2A_1^2 - 1}{A_1^4} \frac{A_2^2}{2A_2^2 - 1} \, .$$

**10.** The method of claim 1, wherein said set of input data traces comprises (i) the data trace having the same midpoint and the nearest offset greater than said designated location and (ii) the data trace having the same midpoint and the nearest offset less than said designated location, and wherein said reconstructed data trace is generated by copying weighted versions of said two input data traces to said designated location and summing them.

**11.** The method of claim 10, wherein said two input data traces are weighted using cosine weights based on the separations between said input data traces and said designated location.

**12.** The method of claim 10, wherein said method further comprises the step of using a muting process to preserve the primary reflections in said set of input data traces, said muting process being based on the following equation:

$$t_{NMO} = C_{mute} \left| f_{max} h \Delta h \left( \left( \frac{\cos\alpha}{V} \right)^2 - \frac{1}{V_{NMO}^2} \right) \right|,$$

where $t_{NMO}$ is the arrival time after NMO, $C_{mute}$ is a constant typically equal to 8, $f_{max}$ is the maximum frequency which is still in phase after NMO, h is the offset of the input data trace, $\Delta h$ is the change in offset between the input data trace and the reconstruction location, $\alpha$ is the angle of reflector dip, V is the primary root-mean-square (RMS) velocity, and $V_{NMO}$ is the normal moveout velocity of the selected wavefield.

**Patentansprüche**

**1.** Verfahren zur Rekonstruktion eines seismischen Wellenfeldes an einer vorgesehenen Position des gemeinsamen Mittelpunkts und des Offsets von einem Satz aus einer seismischen Aufnahme erhaltener seismischer Vorstapel-Datenspuren, wobei jede der seismischen Datenspuren eine Zeitreihe separater Proben des von einem seismischen Empfänger aufgenommenen seismischen Signals ist und das Verfahren die folgenden Schritte umfasst:

Auswählen des zu rekonstruierenden seismischen Wellenfeldes;
Bestimmen der Normal-Auswärtsbewegungs-Geschwindigkeit des seismischen Wellenfeldes;
Auswählen eines Satzes von Eingabe-Datenspuren von dem Satz seismischer Datenspuren gemeinsamen Mittelpunkts, wobei die Eingabe-Datenspuren Positionen des gemeinsamen Mittelpunkts und des Offsets nahe bei der vorgesehenen Position aufweisen;
Durchführen einer Normal-Auswärtsbewegungs-Korrektur der Eingabe-Datenspuren mittels der Normal-Auswärtsbewegungs-Geschwindigkeit des ausgewählten seismischen Wellenfeldes; und
Erzeugen einer für das seismische Wellenfeld an der vorgesehenen Position kennzeichnenden rekonstruierten Datenspur durch Abbilden jeder Datenprobe auf jedem der normal-Auswärtsbewegungs-korrigierten Eingabe-Datenspuren auf ihre entsprechende Position auf der rekonstruierten Datenspur.

**2.** Verfahren nach Anspruch 1, bei dem das zu rekonstruierende seismische Wellenfeld ein primäres Wellenfeld ist.

**3.** Verfahren nach Anspruch 1, bei dem das zu rekonstruierende seismische Wellenfeld ein sekundäres Wellenfeld ist.

**4.** Verfahren nach Anspruch 1, bei dem sich die Position des gemeinsamen Mittelpunkts und des Offsets jeder Eingabe-Datenspur von der der vorgesehenen Position gemäß dem Folgenden unterscheidet:

$$\left|\Delta \text{Mittelpunkt}\right| \leq \frac{\left|\Delta \textit{Offset}\right|}{2}$$

wobei $\Delta$Mittelpunkt die Änderung der Position des gemeinsamen Mittelpunkts von der Eingabe-Datenspur zu der vorgesehenen Position ist und $\Delta$Offset die Änderung des Offsets von der Eingabe-Datenspur zu der vorgesehenen Position ist.

5. Verfahren nach Anspruch 4, bei dem der Höchstwert von $|(\Delta\text{Offset})/(2\Delta\text{Mittelpunkt})|$ gleich einem ganzzahligen Vielfachen der Musterzahl für die seismische Aufnahme ist.

6. Verfahren nach Anspruch 1, bei dem die rekonstruierte Datenspur gemäß dem Folgenden erzeugt wird:

$$P(t_m, y_m, h_m) = G[d_{1/2}(\text{sign}(h_m - h_n)t_n)P(t_n, y_n, h_n)],$$

wobei

$P(t_m, y_m, h_m)$ die Datenprobe für eine gegebene Zeit, einen gegebenen Mittelpunkt und einen gegebenen halben Offset auf der rekonstruierten Datenspur ist,

$P(t_n, y_n, h_n)$ die Eingabe-Datenprobe für eine gegebene Zeit, einen gegebenen Mittelpunkt und einen gegebenen halben Offset ist, die auf die rekonstruierte Datenspur abgebildet wird,

$$G = g\left[\frac{2A_n^2(k_s) - 1}{A_n^3(k_s)} \frac{A_m^3(k_s)}{2A_m^2(k_s) - 1} \frac{t_m^{1/2}}{\sqrt{4\pi h_m(h_n - h_m)}\left[1 - \frac{(y_m - y_n)^2}{(h_m - h_n)^2}\right]^{3/4}}\right],$$

$$d_{1/2}(\text{sign}(h_m - h_n)t_n) = \frac{1}{2\pi}\int d\omega_m \left(\text{sign}(h_n - h_m)j\omega_m\right)^{1/2} e^{-j\omega_m t_n},$$

$g$ ein empirisch aus Modelldaten bestimmter konstanter Multiplikator ist, der benutzt wird, um die Amplitude der Datenprobe auf der rekonstruierten Datenspur zu skalieren,

$$j = \sqrt{-1},$$

$$k_s = \frac{t_m \omega_m}{2h_m}\sqrt{\frac{(y_m - y_n)^2}{(h_m - h_n)^2 - (y_m - y_n)^2}},$$

$\omega_m \equiv$ Kreisfrequenz-Konjugierte zu $t_m$,

$$A_m(k_s) = \left[ 1 + \frac{h_m^2}{A_m^2(k_s)t_m^2} \left( \frac{k_s}{\omega_m} \right)^2 \right]^{1/2},$$

und

$$A_n(k_s) = \frac{t_n}{t_m} A_m(k_s).$$

**7.** Verfahren nach Anspruch 6, bei dem die Zeit der Eingabe-Datenprobe $t_n$ mit der Zeit der rekonstruierten Datenprobe $t_m$ gemäß dem Folgenden in Verbindung steht:

$$t_n = t_m \sqrt{\frac{h_n}{h_m}} \sqrt{1 - \frac{h_n - h_m}{h_n} \sqrt{1 - \left( \frac{y_m - y_n}{h_n - h_m} \right)^2}}$$

**8.** Verfahren nach Anspruch 6, bei dem die Zeit der Eingabe-Datenprobe $t_n$ mit der Zeit der rekonstruierten Datenprobe $t_m$ gemäß dem Folgenden in Verbindung steht:

$$\text{wenn } h_m > h_n, \text{ dann } t_n = t_m \frac{\sqrt{\frac{U+V}{2}}}{|h_m|},$$

oder

$$\text{wenn } h_n > h_m, \text{ dann } t_n = t_m |h_n| \sqrt{\frac{2}{U+V}},$$

wobei

$$U = h_n^2 + h_m^2 - (y_m - y_n)^2$$

und

$$V = \sqrt{U^2 - (2h_n h_m)^2}$$

**9.** Verfahren nach Anspruch 1, bei dem die rekonstruierte Datenspur gemäß dem Folgenden erzeugt wird:

$$W(t_2, x_2, h_2) \approx g \int dx_1 \sqrt{\frac{1}{\left|\frac{\partial^2 \Psi}{\partial \kappa^2}(\kappa_s)\right|}} \frac{J_{21}(\kappa_s)}{\left|\frac{\partial \Psi(\kappa_s)}{\partial t_1}\right|} \sqrt{\frac{A_1}{A_2}} W^{(1/2)}(sign(h_2 - h_1)\frac{A_1}{A_2}t_2, x_1, h_1)$$

wobei

g ein empirisch aus Modelldaten bestimmter konstanter Multiplikator ist, der benutzt wird, um die Amplitude der Datenprobe auf der rekonstruierten Datenspur zu skalieren,

$W(t_2, x_2, h_2)$ die Datenprobe für eine gegebene Zeit, einen gegebenen Mittelpunkt und einen gegebenen halben Offset auf der rekonstruierten Datenspur ist, $W^{(1/2)}(\text{sign}(h_2 - h_1)\frac{A_1}{A_2}t_2, x_1, h_1)$ die Eingabe-Datenprobe nach Anwendung eines Quadratwurzel-Ableitungsoperators ist,

$$\kappa_s = \frac{\frac{A_2}{A_1}(A_2^2 - A_1^2)t_1}{x_2 - x_1},$$

$$\frac{\partial^2 \Psi}{\partial \kappa^2}(\kappa_s) = 2\pi t_1 \left\{ 2\frac{A_2}{A_1}\left(A_2\frac{\partial^2 A_2}{\partial \kappa^2} + \left(\frac{\partial A_2}{\partial \kappa}\right)^2\right) - \left(\frac{\partial^2 A_2}{\partial \kappa^2}A_1 + 2\frac{\partial A_2}{\partial \kappa}\frac{\partial A_1}{\partial \kappa} + A_2\frac{\partial^2 A_1}{\partial \kappa^2}\right)\right\}_{\kappa_s},$$

$$\frac{\partial A_2}{\partial \kappa}(\kappa_s) = \frac{A_1^2}{A_2^3}\frac{1}{2A_2^2 - 1}\left(\frac{h_2}{t_1}\right)^2 \kappa_s,$$

$$\frac{\partial^2 A_2}{\partial \kappa^2}(\kappa_s) = \frac{A_1^2}{A_2^3}\frac{1}{2A_2^2 - 1}\left(\frac{h_2}{t_1}\right)^2\left(1 - \left(\frac{1}{A_2^2} + \frac{4}{(2A_2^2 - 1)^2}\right)\frac{A_1^2 / A_2^2}{2A_2^2 - 1}\left(\frac{h_2}{t_1}\right)^2 \kappa_s^2\right),$$

$$\frac{\partial A_1}{\partial \kappa}(\kappa_s) = \left(\frac{h_1}{t_1}\right)^2\frac{1}{A_1}\frac{1}{A_2^2}\left(\kappa_s - \frac{A_1^2}{A_2^4(2A_2^2 - 1)}\left(\frac{h_2}{t_1}\right)^2 \kappa_s^3\right),$$

$$\frac{\partial^2 A_1}{\partial \kappa^2}(\kappa_s) = \left(\frac{h_1}{t_1}\right)^2\frac{1}{A_1 A_2^2}H(\kappa_s),$$

$$H(\kappa_s) \equiv \left\{ \left[ 1 - \frac{\left(\frac{h_1}{t_1}\right)^2 (2A_2^2 - 1) + \left(\frac{h_2}{t_1}\right)^2 \frac{A_1^2}{A_2^2}}{A_1^2 A_2^2 (2A_2^2 - 1)} \kappa_s^2 + \frac{\frac{A_1^2}{A_2^2}\left(\frac{h_1 h_2}{t_1^2}\right)^2}{A_1^2 A_2^2 (2A_2^2 - 1)} \kappa_s^4 \right] - \right.$$

$$\left. \frac{A_1^2 \left(\frac{h_2}{t_1}\right)^2 \kappa_s^2}{A_2^4 (2A_2^2 - 1)} \left[ 3 - \frac{\left(\frac{h_1}{t_1}\right)^2 (2A_2^2 - 1)^2 + 4\left(\frac{h_2}{t_1}\right)^2 \frac{A_1^4}{A_2^2}(3A_2^2 - 1)}{A_1^2 A_2^2 (2A_2^2 - 1)^2} \kappa_s^2 + \frac{\frac{A_1^2}{A_2^2}\left(\frac{h_1 h_2}{t_1^2}\right)^2}{A_1^2 A_2^4 (2A_2^2 - 1)} \kappa_s^4 \right] \right\},$$

$$A_1 = \sqrt{h_1^2 \frac{U + V - 2h_2^2}{V(U + V)}} \quad \text{wenn} \quad h_2 < h_1,$$

$$A_1 = \sqrt{\frac{1}{2} \frac{U + V - 2h_1^2}{V}} \quad \text{wenn} \quad h_2 > h_1,$$

$$A_2 = \sqrt{\frac{h_1^2}{2} \frac{U + V - 2h_2^2}{V}} \quad \text{wenn} \quad h_2 < h_1,$$

$$A_2 = \sqrt{\frac{U + V - 2h_1^2}{V(U + V)}} \quad \text{wenn} \quad h_2 > h_1,$$

und

$$\frac{J_{21}}{\left|\frac{\partial \Psi}{\partial t_1}\right|} = \frac{2A_1^2 - 1}{A_1^4} \frac{A_2^2}{2A_2^2 - 1}.$$

**10.** Verfahren nach Anspruch 1, bei dem der Satz von Eingabe-Datenspuren (i) die Datenspur, die denselben Mittelpunkt und den nächsten Offset, der größer als die vorgesehene Position ist, aufweist und (ii) die Datenspur, die denselben Mittelpunkt und den nächsten Offset, der geringer als die vorgesehene Position ist, aufweist, umfasst, und bei dem die rekonstruierte Datenspur durch Kopieren gewichteter Versionen dieser zwei Eingabe-Datenspuren zu der vorgesehenen Position und Summieren derselben erzeugt wird.

**11.** Verfahren nach Anspruch 10, bei dem die zwei Eingabe-Datenspuren mittels Cosinus-Gewichtungen, basierend auf den Separationen zwischen den Eingabe-Datenspuren und der vorgesehenen Position, gewichtet werden.

**12.** Verfahren nach Anspruch 10, bei dem das Verfahren ferner den Schritt der Benutzung eines Dämpfungsprozesses zur Erhaltung der primären Reflektionen in dem Satz von Eingabe-Datenspuren umfasst, wobei der Dämpfungsprozess auf der folgenden Gleichung basiert:

$$t_{NMO} = C_{mute} \left| f_{max} \, h\Delta h \left( \left( \frac{\cos\alpha}{V} \right)^2 - \frac{1}{V_{NMO}^2} \right) \right|,$$

wobei $t_{NMO}$ die Ankunftszeit nach NMO ist, $C_{mute}$ eine Konstante ist, die üblicherweise gleich 8 ist, $f_{max}$ die höchste Frequenz ist, die nach NMO noch in Phase ist, h der Offset der Eingabe-Datenspur ist, $\Delta h$ die Änderung im Offset zwischen der Eingabe-Datenspur und der Rekonstruktions-Position ist, $\alpha$ der Winkel der Reflektorneigung ist, V die primäre Effektivwerts(RMS)-Geschwindigkeit ist und $V_{NMO}$ die Normal-Auswärtsbewegungs-Geschwindigkeit des ausgewählten Wellenfeldes ist.

## Revendications

**1.** Procédé pour reconstruire un champ d'ondes sismiques à un emplacement de point médian et décalage commun désigné d'un ensemble de traces de données sismiques avant sommation obtenues d'après un relevé sismique, chacune desdites traces de données sismiques étant une série chronologique d'échantillons discrets du signal sismique reçu par un récepteur sismique, ledit procédé comprenant les étapes de:

sélectionner le champ d'ondes sismiques à reconstruire;
déterminer la vitesse d'obliquité normale dudit champ d'ondes sismiques;
sélectionner un ensemble de traces de données d'entrée à partir dudit ensemble de traces de données sismiques à point médian commun, lesdites traces de données d'entrée ayant des emplacements de points médians et décalages communs proches dudit emplacement désigné;
effectuer une correction d'obliquité normale desdites traces de données d'entrée en utilisant ladite vitesse d'obliquité normale dudit champ d'ondes sismiques sélectionné; et
générer une trace de données reconstruite qui représente ledit champ d'ondes sismiques audit emplacement désigné en indexant chaque échantillon de données sur chacune desdites traces de données d'entrée à obliquité normale corrigées sur son emplacement correspondant sur ladite trace de données reconstruite.

**2.** Procédé de la revendication 1, dans lequel ledit champ d'ondes sismiques à reconstruire est un champ d'ondes primaire.

**3.** Procédé de la revendication 1, dans lequel ledit champ d'ondes sismiques à reconstruire est un champ d'ondes secondaire.

**4.** Procédé de la revendication 1, dans lequel ledit emplacement de point médian et décalage commun de chaque trace de données d'entrée diffère de celui dudit emplacement désigné selon ce qui suit:

$$|\Delta \text{ point médian}| \leq \frac{|\Delta décalage|}{2}$$

où $\Delta$point médian est le changement d'emplacement de point médian commun de ladite trace de données d'entrée audit emplacement désigné et $\Delta$décalage est le changement de décalage de ladite trace de données d'entrée audit emplacement désigné.

5. Procédé de la revendication 4, dans lequel la valeur maximale de I($\Delta$ décalage)/($2\Delta$ point médian)I est égale à un multiple d'un nombre entier du nombre de motifs pour ledit relevé sismique.

6. Procédé de la revendication 1, dans lequel ladite trace de données reconstruite est générée selon ce qui suit:

$$P(t_m, y_m, h_m) = G[d_{1/2}(\text{signe}(h_m - h_n)t_n)P(t_n, y_n, h_n)],$$

où
$P(t_m, y_m, h_m)$ est l'échantillon de données à un moment, un point médian, et un demi-décalage donnés sur la trace de données reconstruite,
$P(t_n, y_n, h_n)$ est l'échantillon de données d'entrée à un moment, un point médian, et un demi-décalage donnés étant indexés sur la trace de données reconstruite,

$$G = g\left[\frac{2A_n^2(k_s)-1}{A^3_n(k_s)}\frac{A^3_m(k_s)}{2A^2_m(k_s)-1}\frac{t^{1/2}_m}{\sqrt{4\pi h_m(h_n-h_m)}\left[1-\frac{(y_m-y_n)^2}{(h_m-h_n)}\right]^{3/4}}\right],$$

$$d_{1/2}(\text{signe }(h_m - h_n)t_n) = \frac{1}{2\pi}\int d\omega_m\,(\text{signe}(h_n-h_m)j\omega_m)^{1/2}e^{-j\omega_m t_n},$$

g est un multiplicateur constant déterminé de manière empirique à partir de données modèles à utiliser pour réduire l'amplitude de l'échantillon de données sur la trace de données reconstruite,

$$j = \sqrt{-1},$$

$$k_s = \frac{t_m\omega_m}{2h_m}\sqrt{\frac{(y_m-y_n)^2}{(h_m-h_n)^2-(y_m-y_n)^2}},$$

$\omega_m$ = fréquence angulaire conjuguée à $t_m$,

$$A_m(k_s) = \left[1+\frac{h^2_m}{A^2_m(k_s)t_m^2}\left(\frac{k_s}{\omega_m}\right)^2\right]^{1/2},$$

et

$$A_n(k_s) = \frac{t_n}{t_m} A_m(k_s).$$

7. Procédé de la revendication 6, dans lequel le temps de l'échantillon de données d'entrée $t_n$ se rapporte au temps d'un échantillon de données reconstruite $t_m$ selon ce qui suit:

$$t_n = t_m \sqrt{\frac{h_n}{h_m}} \sqrt{1 - \frac{h_n - h_m}{h_n}} \sqrt{1 - (\frac{y_m - y_n}{h_n - h_m})^2}$$

8. Procédé de la revendication 6, dans lequel le temps de l'échantillon de données d'entrée $t_n$ se rapporte au temps d'un échantillon de données reconstruite $t_m$ selon ce qui suit:

$$\text{si } h_m > h_n, \text{ alors } t_n = t_m \frac{\sqrt{\frac{U+V}{2}}}{|h_m|},$$

ou

$$\text{si } h_n > h_m, \text{ alors } t_n = t_m |h_n| \sqrt{\frac{2}{U+V}},$$

où

$$U = h_n^2 + h_m^2 - (y_m - y_n)^2$$

et

$$V = \sqrt{U^2 - (2h_n h_m)^2}$$

9. Procédé de la revendication 1, dans lequel ladite trace de données reconstruite est générée selon ce qui suit:

$$W(t_2, x_2, h_2) \approx g \int dx_1 \sqrt{\frac{1}{\left|\frac{\partial^2 \psi}{\partial k^2}(\kappa_s)\right|}} \frac{J_{21}(\kappa_s)}{\left|\frac{\partial \psi(\kappa_s)}{\partial t_1}\right|} \sqrt{\frac{A_1}{A_2}} W^{(1/2)}(signe(h_2 - h_1)\frac{A_1}{A_2} t_2, x_1, h_1)$$

où

g est un multiplicateur constant déterminé de manière empirique à partir de données modèles à utiliser pour réduire l'amplitude de l'échantillon de données sur la trace de données reconstruite,

$W(t_2, x_2, h_2)$ est l'échantillon de données à un moment, un point médian, et un demi-décalage donnés sur la trace de données reconstruite, $W^{(1/2)}(\mathrm{signe}(h_2 - h_1)\dfrac{A_1}{A_2} t_2, x_1, h_1)$ est l'échantillon de données d'entrée après application d'un opérateur de dérivé de racine carrée,

$$\kappa_s = \frac{\dfrac{A_2}{A_1}(A_2^2 - A_1^2)t_1}{x_2 - x_1},$$

$$\frac{\partial^2 \Psi}{\partial \kappa^2}(\kappa_s) = 2\pi t_1 \left\{ 2\frac{A_2}{A_1}\left( A_2 \frac{\partial^2 A_2}{\partial \kappa^2} + (\frac{\partial A_2}{\partial \kappa})^2 \right) - \left( \frac{\partial^2 A_2}{\partial \kappa^2} A_1 + 2\frac{\partial A_2}{\partial \kappa}\frac{\partial A_1}{\partial \kappa} + A_2 \frac{\partial^2 A_1}{\partial \kappa^2} \right) \right\}_{k_s},$$

$$\frac{\partial A_2}{\partial \kappa}(\kappa_s) = \frac{A_1^2}{A_2^3}\frac{1}{2A_2^2 - 1}\left(\frac{h_2}{t_1}\right)^2 \kappa_s.$$

$$\frac{\partial^2 A_2}{\partial \kappa^2}(\kappa_s) = \frac{A_1^2}{A_2^3}\frac{1}{2A_2^2-1}\left(\frac{h_2}{t_1}\right)^2 \left( 1 - \left( \frac{1}{A_2^2} + \frac{4}{(2A_2^2-1)^2} \right)\frac{A_1^2/A_2^2}{2A_2^2-1}\left(\frac{h_2}{t_1}\right)^2 \kappa_s^2 \right),$$

$$\frac{\partial A_1}{\partial \kappa}(\kappa_s) = \left(\frac{h_1}{t_1}\right)^2 \frac{1}{A_1}\frac{1}{A_2^2}\left( \kappa_s - \frac{A_1^2}{A_2^4(2A_2^2-1)}\left(\frac{h_2}{t_1}\right)^2 \kappa_s^3 \right),$$

$$\frac{\partial^2 A_1}{\partial \kappa^2}(\kappa_s) = \left(\frac{h_1}{t_1}\right)^2 \frac{1}{A_1 A_2^2} H(\kappa_s),$$

$$H(\kappa_s) \equiv \left\{ \left[ 1 - \frac{\left(\frac{h_1}{t_1}\right)^2 (2A_2^2 - 1) + \left(\frac{h_2}{t_1}\right)^2 \frac{A_1^2}{A_2^2}}{A_1^2 A_2^2 (2A_2^2 - 1)} \kappa_s^2 + \frac{\frac{A_1^2}{A_2^2}\left(\frac{h_1 h_2}{t_1^2}\right)^2}{A_1^2 A_2^2 (2A_2^2 - 1)} \kappa_s^4 \right] - \right.$$

$$\left. \frac{A_1^2 \left(\frac{h_2}{t_1}\right)^2 \kappa_s^2}{A_2^4 (2A_2^2 - 1)} \left[ 3 - \frac{\left(\frac{h_1}{t_1}\right)^2 (2A_2^2 - 1)^2 + 4\left(\frac{h_2}{t_1}\right)^2 \frac{A_1^4}{A_2^2} (3A_2^2 - 1)}{A_1^2 A_2^2 (2A_2^2 - 1)^2} \kappa_s^2 + \frac{\frac{A_1^2}{A_2^2}\left(\frac{h_1 h_2}{t_1^2}\right)^2}{A_1^2 A_2^4 (2A_2^2 - 1)} \kappa_s^4 \right] \right\},$$

$$A_1 = \sqrt{h_1^2 \frac{U + V - 2h_2^2}{V(U + V)}} \quad \text{si } h_2 < h_1,$$

$$A_1 = \sqrt{\frac{1}{2} \frac{U + V - 2h_1^2}{V}} \quad \text{si } h_2 > h_1,$$

$$A_2 = \sqrt{\frac{h_1^2}{2} \frac{U + V - 2h_2^2}{V}} \quad \text{si } h_2 < h_1,$$

$$A_2 = \sqrt{\frac{U + V - 2h_1^2}{V(U + V)}} \quad \text{si } h_2 > h_1,$$

et

$$\frac{J_{21}}{\left|\frac{\partial \Psi}{\partial t_1}\right|} = \frac{2A_1^2 - 1}{A_1^4} \frac{A_2^2}{2A_2^2 - 1}.$$

**10.** Procédé de la revendication 1, dans lequel ledit ensemble de traces de données d'entrée comprend (i) la trace de données ayant le même point médian et le décalage le plus proche supérieur audit emplacement désigné et (ii) la trace de données ayant le même point médian et le décalage le plus proche inférieur audit emplacement désigné, et où ladite trace de données reconstruite est générée en copiant des versions pondérées desdites deux traces de données d'entrée audit emplacement désigné et en calculant leur somme.

11. Procédé de la revendication 10, dans lequel lesdites deux traces de données d'entrée sont pondérées en utilisant des poids de cosinus sur la base des séparations entre lesdites traces de données d'entrée et ledit emplacement désigné.

12. Procédé de la revendication 10, dans lequel ledit procédé comprend en plus l'étape d'utiliser un processus d'atténuation pour préserver les réflexions primaires dans ledit ensemble de traces de données d'entrée, ledit processus d'atténuation étant basé sur l'équation suivante:

$$t_{NMO} = C_{mute}\left|f_{max}\,h\Delta h\left(\left(\frac{\cos\alpha}{V}\right)^2 - \frac{1}{V_{NMO}^2}\right)\right|,$$

où $t_{NMO}$ est le temps d'arrivée après NMO, $C_{atténuation}$ est une constante typiquement égale à 8, $f_{max}$ est la fréquence maximale qui est encore en phase après NMO, $h$ est le décalage de la trace de données d'entrée, $\Delta h$ est le changement de décalage entre la trace de données d'entrée et l'emplacement de reconstruction, $\alpha$ est l'angle de pendage de réflecteur, $V$ est la vitesse moyenne quadratique (RMS) primaire, et $V_{NMO}$ est la vitesse d'obliquité normale du champ d'ondes sélectionné.

**FIG. 1A**

**FIG. 1B**

**FIG. 1C**

EP 0 923 745 B1

FIG. 2

FIG. 4

FIG. 3A

FIG. 3B

FIG. 3C

```
                                              ⌐126
        ┌─────────────────────────┐
        │     Prestack data set   │
        └─────────────────────────┘
                     │
                     ▼                        ⌐128
        ┌─────────────────────────┐
        │     Select wavefield to │
        │      be reconstructed   │
        └─────────────────────────┘
                     │
                     ▼                        ⌐130
        ┌─────────────────────────┐
        │   Determine NMO velocity│
        │     of selected wavefield│
        └─────────────────────────┘
                     │
                     ▼                        ⌐132
        ┌─────────────────────────┐
        │      Select midpoint-   │
        │     offset location to be│
        │        reconstructed    │
        └─────────────────────────┘
                     │
                     ▼                        ⌐134
        ┌─────────────────────────┐
        │   Select input data traces│
        └─────────────────────────┘
                     │
                     ▼                        ⌐136
        ┌─────────────────────────┐
        │       NMO correct       │
        │      input data traces  │
        └─────────────────────────┘
                     │
                     ▼                        ⌐138
        ┌─────────────────────────┐
        │   Generate reconstructed│
        │        data trace       │
        └─────────────────────────┘
```

## FIG. 5

FIG. 6

**FIG. 7A**

**FIG. 7B**

EP 0 923 745 B1

FIG. 7C

FIG. 8A

FIG. 8B

3.5 s

3.5 s

6.5 s

6.5 s

FIG. 9

3.5 s

5.5 s

*FIG. 10*

3.5 s

5.5 s

3.5 s

5.5 s

*FIG. 11*

EP 0 923 745 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4594693 A

- US 5206837 A

**Non-patent literature cited in the description**

- **SPITZ, S.** Seismic trace interpolation in the F-X domain. *Geophysics,* June 1991, vol. 56 (6), 785-794

- **RONEN, J.** Wave-equation trace interpolation. *Geophysics,* July 1987, vol. 52 (7), 973-974